# EUROPÄISCHE PATENTSCHRIFT

(11) **EP 1 088 280 B1**
(45) Veröffentlichungstag und Bekanntmachung des Hinweises auf die Patenterteilung: **17.06.2009**
(21) Anmeldenummer: 99929268.3
(22) Anmeldetag: 18.06.1999
(51) Int. Cl.: G06F 17/30

(54) **VERFAHREN UND SYSTEM ZUR SCHNELLEN SPEICHERRESIDENTEN VERARBEITUNG VON TRANSAKTIONSDATEN**
METHOD AND SYSTEM FOR FAST MEMORY-RESIDENT PROCESSING OF TRANSACTION DATA
PROCEDE ET SYSTEME POUR EFFECTUER UN TRAITEMENT RAPIDE, RESIDANT EN MEMOIRE, DE DONNEES DE TRANSACTION

(30) Priorität: 19.06.1998 US 100581
(43) Veröffentlichungstag der Anmeldung: 04.04.2001
(73) Patentinhaber: SAP AG, 69190 Walldorf (DE)
(72) Erfinder: PRIMSCH, Jürgen, D-13593 Berlin (DE)
(74) Vertreter: Jany, Peter
(86) Internationale Anmeldenummer: PCT/EP1999/004227
(87) Internationale Veröffentlichungsnummer: WO 1999/067725

(56) Entgegenhaltungen:
- WO-A-96/34350
- GB-A- 2 253 500
- DATABASE INSPEC [Online] INSTITUTION OF ELECTRICAL ENGINEERS, STEVENAGE, GB Inspec No. AN6225477, XP002122796 & BERNSTEIN P.A. ET AL. : "The Microsoft Repository" PROC. VLDB 97: 23RD. INT. CONF. ON VERY LARGE DATABASES, 26. - 29. August 1997,
- NELSON M L ET AL: "A RELATIONAL OBJECT-ORIENTED MANAGEMENT SYSTEM" PROCEEDINGS OF THE ANNUAL INTERNATIONAL PHOENIX CONFERENCE ON COMPUTERS AND COMMUNICATIONS,US,LOS ALAMITOS, IEEE COMP. SOC. PRESS, Bd. CONF. 9, Seite 319-323 XP000140017 ISBN: 0-8186-2030-7
- BARSALOU T: "UPDATING RELATIONAL DATABASES THROUGH OBJECT-BASED VIEWS" SIGMOD RECORD,US,ASSOCIATION FOR COMPUTING MACHINERY, NEW YORK, Bd. 20, Nr. 2, Seite 248-257 XP000364639
- "STORING QUERY OBJECTS BY TYPE IN A RELATIONAL DATABASE" IBM TECHNICAL DISCLOSURE BULLETIN,US,IBM CORP. NEW YORK, Bd. 32, Nr. 4B, Seite 14 XP000067092 ISSN: 0018-8689

## Beschreibung

### Technisches Gebiet

Die vorliegende Erfindung betrifft allgemein ein Verfahren zum Speichern, Abrufen und Verarbeiten von Daten in einem Transaktionssystem. Insbesondere betrifft die Erfindung ein Verfahren zur Integrierung von relationaler und objektorientierter Funktionalität zur Ausführung von Funktionen an gespeicherten Daten auf Echtzeitbasis.

### Stand der Technik

In der Computerindustrie ist es üblich, Daten in kommerziellen Datenbanksystemen zu speichern und diese Daten mit einem Datenbank-Managementsystem abzurufen. Es gibt zwei allgemeine Arten von Datenbank-Managementsystemen, relationale und objektorientierte. Relationale Datenbanksysteme eignen sich gut zur Verwaltung großer Datenmengen, während sich objektorientierte Datenbanksysteme gut für das Ausdrücken komplexer Beziehungen zwischen Objekten eignen. Relationale Datenbanksysteme eignen sich gut zum Abrufen von Daten, unterstützen die Datenmanipulation jedoch nur wenig oder überhaupt nicht, während sich objektorientierte Systeme äußerst gut für die Datenmanipulation eignen, das Anfragen und Abrufen von Daten jedoch nur wenig oder überhaupt nicht unterstützen. Abhängig von der gegebenen Aufgabe sind verschiedene Systeme verfügbar, die sich für bestimmtte Aufgaben eignen. Zur Verwaltung einfacher Daten ohne Anfragen ist ein traditionelles Datenbanksystem nicht einmal notwendig. Es reicht ein einfaches Dateisystem aus. Um einfache Daten mit Anfragen zu verwalten, wäre ein relationales Datenbanksystem ideal. Wenn die betreffenden Daten komplex und ohne Anfragen sind, würde ein objektorientiertes Datenbanksystem verwendet. Wenn schließlich die betreffenden Daten komplex sind und Anfragenmöglichkeiten erfordern, dann wäre es wünschenswert, ein objekt-relationales Datenbank-Managementsystem zu verwenden.

Es wurde versucht, die inneren Funktionalitäten zu kombinieren; da die beiden Modelle jedoch grundsätzlich verschieden sind, ist die Integration beider recht schwierig. Relationale Datenbanksysteme basieren auf zweidimensionalen Tabellen, in denen jeder Artikel in einer Zeile erscheint. Beziehungen zwischen den Daten werden durch Vergleich der in diesen Tabellen gespeicherten Werte ausgedrückt. Das Objektmodell basiert auf der engen Integration von Code und Daten, flexiblen Datentypen und Bezügen. Objektorientierte Datenbanken haben ihren Ursprung in dem Bereich der objektorientierten Programmierung. In diesem Bereich arbeiten Benutzer mit Objekten und Operationen an diesen Objekten. Anstatt an ein "ABT-Tupel" plus eine Ansammlung entsprechender "ANG-Tupel" zu denken, die "Fremdschlüsselwerte" umfassen, die sich auf den "primären Schlüsselwert" in diesem "ABT-Tupel" beziehen, sollte der Benutzer in der Lage sein, direkt an ein Abteilungsobjekt zu denken, das einer entsprechenden Menge von Angestellten-Objekten entspricht.

Ein Grundsatz des OO-Ansatzes besteht darin, daß alles ein Objekt ist. Manche Objekte sind primitiv und nicht änderbar (Integer, Zeichenketten usw.). Andere Objekte - die der Regel vom Benutzer erzeugt werden - sind komplexer und änderbar. Diese komplexeren Objekte entsprechen Variablen mit beliebiger interner Komplexität. Jedes Objekt hat einen Typ (der OO-Ausdruck ist eine Klasse). Einzelne Objekte werden manchmal als Objektinstanzen bezeichnet. Ein innerer Aspekt jedes gegebenen Typs besteht aus der Menge von Operatoren oder Funktionen (der OO-Ausdruck ist "Methoden"), die auf Objekte dieses Typs angewandt werden können. Außerdem sind alle Objekte gekapselt. Dies bedeutet, daß die Darstellung oder interne Struktur eines gegebenen Objekts für die Benutzer dieses Objekts nicht sichtbar ist. Stattdessen wissen Benutzer nur, daß das Objekt in der Lage ist, bestimmte Funktionen auszuführen. Der Vorteil der Kapselung besteht darin, daß es möglich wird, die interne Darstellung von Objekten zu ändern, ohne daß die Anwendungen, die diese Objekte benutzen, umgeschrieben werden müssen. Anders ausgedrückt führt diese Kapselung zu Datenunabhängigkeit. Jedes Objekt hat eine eindeutige Kennung, die als OID (Objekt-ID) bezeichnet wird, die als Adressen für Zeiger aus anderen Teilen der Datenbank verwendet werden können.

Relationale Datenbanksysteme unterstützen eine kleine, feste Ansammlung von Datentypen (z.B. Integer, Daten und Zeichenketten), die sich für traditionelle Anwendungsbereiche, wie zum Beispiel Verwaltungsdatenverarbeitung, als sinnvoll erwiesen haben. In vielen Anwendungsbereichen müssen jedoch komplexere Arten von Daten behandelt werden. In der Regel wurden diese komplexen Daten jedoch nicht in einem DBMS, sondern in Dateisystemen des Betriebssystems oder spezialisierten Datenstrukturen gespeichert. Bereiche mit komplexen Daten sind zum Beispiel die computergestützte Entwicklung und Modellierung (CAD/CAM), Multimedia-Quellen und die Dokumentverwaltung. Mit zunehmender Datenmenge werden die vielen, durch ein DBMS für die Datenverwaltung gebotenen Merkmale - zum Beispiel verringerte Anwendungsentwicklungszeit, Gleichzeitigkeitssteuerung und - wiederherstellung, Indexierungsunterstützung und Anfragemöglichkeiten - zunehmend wünschenswert und notwendig. Um solche Anwendungen zu unterstützen, muß ein DBMS komplexe Datentypen unterstützen. Objektorientierte Konzepte haben die Bemühungen zur Verbesserung der Datenbank-Unterstützung für komplexe Daten stark beeinflußt. Wie bereits erwähnt, gehören zum Stand der Technik relationale Datenbank-Managementsysteme, die diese Funktionen in bezug auf einfache Daten unterstützen. Ein relationales DBMS könnte denkbar komplexe Datentypen speichern. Zum Beispiel könnten Bilder, Videos usw. als Blobs ("basic large objects - einfache große Objekte") in gegenwärtigen relationalen Systemen gespeichert werden. Ein Blob ist einfach ein langer Bytestrom und die Unterstützung des DBMS besteht darin, Blobs auf eine solche Weise zu speichern und abzurufen, daß sich ein Benutzer nicht um die Größe des Blobs kümmern muß; ein Blob kann mehrere Seiten umspannen. Alle weitere Verarbeitung des Blobs muß durch das Anwendungsprogramm des Benutzers in der Hostsprache erfolgen, in der die SQL-Sprache eingebettet ist. Diese Lösung ist nicht effizient, weil man gezwungen ist, alle Blobs in einer Ansammlung abzurufen, wenn die meisten unter ihnen aus der Antwort herausgefiltert werden könnten, indem eine benutzerdefinierte Funktion in dem DBMS angewandt wird. Obwohl objektorientierte Datenbanken im Stand der Technik die Speicherung komplexer Daten unterstützen, stellen sie nicht die Anfrage- und Indexierungsmöglichkeiten zur Verwaltung solcher komplexen Daten bereit.

Es wird ein Datenbank-Managementsystem benötigt, das die Merkmale und Funktionalität traditioneller relationaler Datenbank-Managementsysteme bereitstellen kann, aber mit komplexen Datentypen verwendet werden kann. Als Folge dieses Bedarfs gab es einen Trend zu der Entwicklung von objekt-relationalen Datenbank-Managementsystemen.

Objekt-relationale Datenbanken können als ein Versuch zur Erweiterung relationaler Datenbanksysteme mit der zur Unterstützung einer breiteren Klasse von Anwendungen notwendigen Funktionalität angesehen werden und liefern in vielerlei Hinsicht eine Brücke zwischen relationalen und objektorientierten Bereichen. Auf dem Markt gibt es mittlerweile mehrere objekt-relationale Datenbank-Managementsysteme (ORDBMS). Zu diesen gehören der Informix Universal Server, UniSQL und O2. Der in der gegenwärtigen Entwicklung verfolgte Ansatz in der objekt-relationalen Technologie besteht darin, die Funktionalität bestehender relationaler DBMS durch Hinzufügen neuer Datentypen zu erweitern. Traditionelle Systeme boten eine begrenzte Flexibilität bei den verfügbaren Datentypen. Daten werden in Tabellen gespeichert, und die Art jedes Feldwertes ist auf einen einfachen atomischen Typ begrenzt. Dieses System mit Typbeschränkung wurde um drei Typen erweitert: benutzerdefinierte abstrakte Typen, konstruierte Typen und Bezugstypen. Diese werden zusammen als komplexe Typen bezeichnet. Man nehme als Beispiel ein JPEG-Bild. Dieser Typ ist keiner der typischen eingebauten Typen des DBMS, kann aber in einem ORDBMS durch einen Benutzer definiert werden, um Bilddaten zu speichern, die mit dem JPEG-Standard komprimiert wurden. Ein Schlüsselmerkmal von ORDBMS besteht darin, Benutzern die Definition willkürlicher neuer Datentypen zu ermöglichen. Das ORDBMS ermöglicht Benutzern, Objekte des Typs jpeg_image sowie ein Objekt eines beliebigen anderen Typs, wie zum Beispiel einen Integer, zu speichern und abzurufen. Bei neuen Datentypen müssen gewöhnlich typenspezifische Operationen durch den Benutzer definiert werden, der sie erzeugt. Zum Beispiel könnte man Operationen an einem Bild-Datentyp wie zum Beispiel Komprimieren, Drehen, Schrumpfen, und Zurechtschneiden definieren. Die Kombination des Datentyps und seiner zugeordneten Methoden wird als ein abstrakter Datentyp (ADT) bezeichnet. Das Label "Abstrakt" wird auf diese Datentypen angewandt, weil das Datenbanksystem nicht wissen muß, wie die Daten eines ADT gespeichert werden oder wie die Methoden des ADT arbeiten. Es muß nur die verfügbaren Methoden und die Eingabe- und Ausgabetypen für die Methoden kennen. Das Verbergen von internen ADT-Bestandteilen wird als Kapselung bezeichnet. Wenn das Objekt besonders groß ist, werden Objektkennzeichen bedeutsam. Das Speichern von Kopien eines großen Werts in mehrfachen Objekten des konstruierten Typs kann wesentlich mehr Raum beanspruchen als das einmalige Speichern des Werts und die Bezugnahme auf ihn durch Objekte des Bezugstyps an anderer Stelle. Diese zusätzliche Speicheranforderung kann sich sowohl auf die Plattenauslastung als auch auf das Puffermanagement auswirken.

Große ADT-Objekte verkomplizieren das Layout von Daten auf der Platte. Dieses Problem wird gut verstanden und wurde im wesentlichen in allen ORDBMS und OODBMS gelöst. Benutzerdefinierte ADT können recht groß sein. Insbesondere können sie größer als eine einzelne Plattenseite sein. Große ADT erfordern wie Blobs besondere Speicherung, in der Regel an einer anderen Stelle auf der Platte als die Tupel, die diese enthalten. Es werden plattengestützte Zeiger aus den Tupeln in die Objekte, die sie enthalten, aufrechterhalten.

Ein weiteres Problem bei ORDBMS im Stand der Technik ist die Effizienz. Wenn komplexe Objekte in einem rein relationalen Datenbank-Managementsystem als Blobs gespeichert werden, dann muß das gesamte Objekt aus dem Speicher abgerufen und zu dem Client übertragen werden. Alle und jede Verarbeitung des Objekts muß durch den Client selbst erfolgen. In einem ORDBMS ist die Leistung jedoch verbessert, weil Methoden nicht durch den Client, sondern durch den Server ausgeführt werden. Als ein triviales Beispiel betrachte man die Anfrage "Finde alle Bücher mit mehr als 20 Kapiteln". In einem traditionellen relationalen DBMS könnten Bücher als Blobs dargestellt werden, und der Client muß jedes Buch abrufen und scannen, um zu entscheiden, ob es diese Kriterien erfüllt. Mit ordnungsgemäßer OO-Unterstützung kann der Server dagegen die Methode "Anzahl von Kapiteln" ausführen, und nur diese Bücher werden zu dem Client gesendet.

Dies ist ein Aspekt der Leistung in dem Sinne, daß nur die erforderlichen Daten abgerufen und zu dem Client gesendet werden. Ein weiterer Aspekt der Effizienz betrifft die Adressenräume. Wenn das Speichersystem auf einem anderen Adressraum als das Benutzerprogramm abläuft, dann muß zur Verarbeitung dieses Befehls ein Adressraumwechsel eintreten. Aufgrund des Adressraumwechsels läuft der Befehl zwei oder drei Größenordnungen langsamer als in dem nicht-dauerhaften Fall ab. Ein solcher Leistungsstoß ist für Benutzer unannehmbar. Aus diesem Grund sind dauerhafte Speichersysteme so entworfen, daß sie in demselben Adressraum wie das Benutzerprogramm ablaufen. Die Vermeidung eines Adressraumwechsels stellt eine wesentlich höhere Leistung bereit. Der Vorteil bei der Verwendung einer dauerhaften Sprache besteht darin, daß in der Welt der dauerhaften Sprache Updates sehr "leichtgewichtig" sind, das heißt, sie nehmen eine sehr geringe Zeitdauer in Anspruch. Im Ergebnis unterscheidet sich das Erstellen von Updates in einer niedrigen Sprache wie zum Beispiel C++ fundamental von dem Erstellen von Updates in einer Programmierhochsprache wie zum Beispiel SQL. In C++ oder in einer beliebigen anderen Programmiersprache der dritten Generation sind Updates im wesentlichen leichtgewichtig, das heißt sie modifizieren eine einzige Speicherstelle.

Ein letzter Aspekt der Leistung ist die Datenübertragung zwischen dem DBMS und dem Adressraum, in dem die Funktion abläuft. Im Stand der Technik werden Daten aus dem DBMS, das auf einer Festplatte oder in einem bestimmten ähnlichen Gerät gespeichert ist, zu der Anwendung transportiert. Diese Art von Datentransfer belastet Netzressourcen enorm und verursacht unannehmbare Verzögerungen. Die Platten- Ein-/Ausgabe ist eine Quelle wesentlicher Verzögerungen der Verarbeitungsgeschwindigkeiten im Stand der Technik. In einer Situation, in der große Mengen von Transaktionsdaten in einem traditionellen relationalen DBMS vorliegen, ist es wünschenswert, komplexe Berechnungen an diesen Daten durchzuführen. Der begrenzende Faktor bei solchen Datenoperationen ist die Geschwindigkeit und Leistung. Im Stand der Technik werden große Datenmengen durch das DBMS abgerufen und als Eingabe für eine Funktion bereitgestellt, die mit den Daten abläuft und einen Ausgabewert zurückgibt. Es treten jedoch E/A-Engpässe auf, wenn die Daten aus der Platte in den Speicher übertragen werden müssen. Wenn zum Beispiel mit großen Mengen von Transaktionsdaten gearbeitet werden muß, um eine Echtzeit- oder Nahezu-Echtzeitdatenanalyse bereitzustellen, müssen die tatsächlichen Transaktionsdaten aus dem DBMS übertragen und zu dem Client geliefert werden, in welchem der rechnerische Prozeß ausgeführt wird. Dies hat traditionell zu wesentlichen Verzögerungen geführt.

Die vorliegende Erfindung zielt darauf ab, diese Unzulänglichkeit zu korrigieren und eine schnelle, effiziente Verarbeitung von Daten zu ermöglichen, die aus einer Datenbank auf Echtzeitbasis abgerufen werden.

Die obigen Ausführungen können vorteilhaft im Kontext von Unternehmensressourcenplanungssystemen (ERP-Systemen) eingesetzt werden. Diese Transaktionssysteme werden von Unternehmen eingesetzt, um deren Geschäftsprozesse auf Tagesbasis zu automatisieren und zu verwalten. Diese Online-Transaktionsverarbeitungssysteme sind so ausgelegt, daß sie eine integrierte Verarbeitung aller Geschäftsroutinen und Transaktionen bereitstellen. Dazu gehören unternehmensweite, integrierte Lösungen sowie spezialisierte Anwendungen für einzelne Funktionen von Abteilungen. Diese spiegeln alle die geschäftskritischen Prozesse des Unternehmens wider - Finanzen, Produktion, Vertrieb und Personal.

Es ist vorteilhaft, in der Lage zu sein, die durch solche Systeme erzeugten Transaktionsdaten zu analysieren. Im Stand der Technik haben Unternehmen Computer eingesetzt, um Unternehmensprozeßdaten zu analysieren und Entscheidungsunterstützung bereitzustellen. Traditionell wurden Daten aus den Transaktionssystemen stapelweise in ein Daten-Warehouse heraufgeladen. Die Analyse wurde an den Daten aus dem Daten-Warehouse durchgeführt. Die Analyse wurde nicht auf Echtzeitbasis durchgeführt. Die vorliegende Erfindung zielt darauf ab, diese Unzulänglichkeit zu korrigieren.

Eine Aufgabe der vorliegenden Erfindung besteht darin, ein System und Verfahren bereitzustellen, das komplexe Manipulationen an großen Mengen an Transaktionsdaten in Echtzeit durchführen kann.

Eine weitere Aufgabe der vorliegenden Erfindung besteht darin, die E/A-Engpässe zu beseitigen, die traditionell auftreten, wenn große Mengen an Transaktionsdaten zur Verarbeitung zu dem Client übertragen werden.

Eine weitere Aufgabe der vorliegenden Erfindung besteht darin, ein System und Verfahren bereitzustellen, die die Speicherung von Transaktionsdaten in optimierten Datenstrukturen ermöglichen, wobei geeignete Darstellungen von komplexen Datenstrukturen, wie zum Beispiel Netzstrukturen oder Baumstrukturen aufgrund von Objektbezügen bereitgestellt werden.

Eine weitere Aufgabe der vorliegenden Erfindung besteht darin, die Transaktionsdaten in optimierten Datenstrukturen gespeichert zu halten, die mit den Transaktionsdaten korrelieren, die auf dem Transaktionssystem aktualisiert werden.

Eine weitere Aufgabe der vorliegenden Erfindung besteht darin, ein System und Verfahren bereitzustellen, durch das komplexe Objekte in einer objektorientierten Umgebung gespeichert werden können.

Eine weitere Aufgabe der vorliegenden Erfindung besteht darin, ein System bereitzustellen, mit welchem die besagten komplexen Objekte mit traditionellen relationalen Datenbanktechniken und der Sprache SQL abgefragt werden können.

Eine weitere Aufgabe der vorliegenden Erfindung besteht darin, ein System bereitzustellen, in dem die komplexen Objekte wie in einer relationalen Umgebung komplizierten Transaktions-Managementsystemen unterworfen sind.

### Kurze Darstellung der Erfindung

Die vorliegende Erfindung ist in den Ansprüchen definiert. In einer beispielhaften Ausführungsform enthält das System einen oder mehrere Clients (z.B. Endgeräte oder PCs), die über ein Netzwerk mit einem Anwendungsserver verbunden sind. Der Anwendungsserver enthält einen sehr großen Hauptspeicher, in dem ein hybrides objekt-relationales Datenbanksystem ausgeführt wird. Das Datenbanksystem umfaßt ein traditionelles relationales Datenbank-Managementsystem, dessen Funktionalität erweitert wird, indem die Einführung komplexer Datentypen, nämlich dauerhafte C++-Klassen und gespeicherte Prozeduren, ermöglicht wird. Auf diese komplexen Datentypen kann mittels SQL durch benutzerdefinierte Typen und benutzerdefinierte Funktionen zugegriffen werden. Transaktionsdaten werden in optimierten Datenstrukturen als komplexe Objekte in demselben großen Hauptspeicher gespeichert. Zur Speicherung dieser komplexen Objekte werden separate Speichercontainer bereitgestellt. Jedes komplexe Objekt selbst ist eine Instanz der dauerhaften C++-Klasse. Wenn ein Objekt erzeugt wird, wird eine eindeutige Objektkennung (OID) für dieses Objekt erzeugt. Die OID dient als ein Zeiger auf das komplexe Objekt, das in dem separaten Speichercontainer gespeichert wird. Die Erfindung umfaßt weiterhin ein Objektmanagementsystem (OMS) zum Definieren, Manipulieren und Abrufen von dauerhaften C++-Objekten unter Verwendung von C++-Methoden des Objektmanagements und Verfahren des traditionellen relationalen Datenbank-Transaktionsmanagements.

Für jede dauerhafte C++-Klasse gibt es zugeordnete gespeicherte Prozeduren. Die gespeicherten Prozeduren werden als Methoden von COM-Objekten ausgeführt, die in C++ implementiert sind. Die Methoden sind in einer Bibliothek registriert und werden dynamisch an den Adressraum angebunden, in welchem der Datenbankprozeß abläuft. Diese Methoden sind in C++ geschrieben und sind so ausgelegt, daß sie an Daten arbeiten, die als komplexe Objekte gespeichert sind, die Instanzen der dauerhaften C++-Klasse sind.

Im allgemeinen Betrieb fordern ein oder mehrere Clients die Durchführung einer Datenverarbeitungsoperation an einer Menge von als komplexe Objekte gespeicherten Daten an. Das ORDBMS und die Daten selbst sind alle in dem großen Hauptspeicher gespeichert. Auf diese Weise werden E/A-Engpässe beseitigt, da keine schwerwiegenden Datenübertragungen notwendig sind, und die Leistungsvorteile werden erzielt. Die gespeicherte Prozedur wird außerdem in derselben Hauptspeicheradresse verfügbar gemacht. Die gespeicherte Prozedur kann auf dieses komplexe Objekt durch das Objektkennzeichen über eine zwischengeschaltete GET-Methode zugreifen. Das Objektkennzeichen wird in einer Hauptspeicheradresse umgesetzt, in der das besagte Objekt gespeichert ist. Eine Kopie des dauerhaften Objekts, z. B. eines C++-Objekts wird dann in demselben Hautpspeicheradressraum der gespeicherten Prozedur verfügbar gemacht. Als Folge wird die gespeicherte Prozedur in demselben Adressraum ausgeführt, in dem das DBMS abläuft, wodurch zusätzliche Leistungsvorteile für Operationen bereitgestellt werden, bei denen große Datenspeicher komplex analysiert werden. Vor der vorliegenden Erfindung nahmen komplexe Anfragen große Mengen an Ressourcen in Anspruch, wodurch es ineffizient wurde, tatsächliche Operationsdaten aus Transaktionssystemen ohne wesentliche Verzögerungen zu verwenden. Gemäß der vorliegenden Erfindung werden die Transaktionsdaten in dem vorgeschlagenen ORDBMS gesammelt und die registrierten Funktionen in demselben Adresssraum ausgeführt, in dem der ORDBMS-Prozeß abläuft, und eine komplexe Analyse durchgeführt, wodurch eine gegenüber dem bekannten Stand der Technik verbesserte Leistung bereitgestellt wird.

### Kurze Beschreibung der Zeichnungen

Es zeigen:
FIG. 1 ein Diagramm einer für die Anwendung der vorliegenden Erfindung geeigneten Umgebung.
FIG. 2 ein Diagramm des Standes der Technik.
FIG. 3 ein Diagramm eines Rechensystems, in dem die vorliegende Erfindung implementiert werden kann.
FIG. 4 ein Blockschaltbild eines Software-Untersystems zur Steuerung der Operation des Computersystems von FIG. 3.
FIG. 5 ein Blockschaltbild eines Client/Server-Systems, in dem die vorliegende Erfindung vorzugsweise realisiert wird.
FIG. 6 ein Diagramm der bevorzugten Implementierung der vorliegenden Erfindung.
FIG. 7 ein Flußdiagramm einer Beispieltransaktion, die in der bevorzugten Ausführungsform der vorliegenden Erfindung eingeleitet wird.
FIG. 8 ein Diagramm der Architektur der bevorzugten Ausführungsform der vorliegenden Erfindung.
FIG. 9 ein Diagramm einer beispielhaften optimierten Datenstruktur, die in der vorliegenden Erfindung als ein UDT definiert werden kann.
FIG. 10 ein Diagramm der Abbildung von Daten aus einem relationalen in ein objektorientiertes Modell.
FIG. 11 ein Beispiel eines Planungsmodells, das mit den optimierten Datenstrukturen aus FIG. 9 aufgebaut ist.
FIG. 12 ein Diagramm eines Verteilernetzes, das sich für die objektorientierte Datenmodellierung eignet.
FIG. 13 ein Diagramm der Architektur des Objektmanagementsystems.
FIG. 14 ein Diagramm der Architektur der Objektdatenspeicherung in der OMS-Bank.
FIG. 15 ein Diagramm eines Seiten-Speicherlayouts mit einem darin gespeicherten Datenobjekt.
FIG. 16 ein Diagramm der Struktur der Objekt-ID in der bevorzugten Ausführungsform.
FIG. 17 die Speicherung von Objekten in den Seiten-Speicherlayouts des Hauptspeichers gemäß der vorliegenden Erfindung.
FIG. 18 eine Folge von Seiten in einem Seiten-Speicherlayout gemäß der vorliegenden Erfindung.
FIG. 19 die OID des optimierten Datenmodells, das sich zur Verwendung in der vorliegenden Erfindung eignet.
FIG. 20 die Schnittstelle zwischen Anwendungsobjekten und dem liveCache-Server.
FIG. 21 die Methode des Ausgebens einer SQL-Anfrage an den liveCache-Server zum Abrufen von Funktionen und Objektdaten.
FIG. 22 ein Diagramm des Transaktionsmanagementsystems der vorliegenden Erfindung.
FIG. 23 eine Darstellung der Protokollierung für das Transaktionsmanagementsystem der vorliegenden Erfindung.
FIG. 24 den Schritt Eins des Datensynchronisierungsmittel der vorliegenden Erfindung.
FIG. 25 den Schritt Zwei des Datensynchronisierungsmittels der vorliegenden Erfindung.
FIG. 26 den Schritt Drei des Datensynchronisierungsmittels der vorliegenden Erfindung.

### Ausführliche Beschreibung einer bevorzugten Ausführungsform

Die folgende Beschreibung konzentriert sich auf die zur Zeit bevorzugte Ausführungsform der vorliegenden Erfindung, die in einer Netzumgebung wirkt, die Client/Server-Anwendungen ausführt. Die vorliegende Erfindung ist jedoch nicht auf bestimmte Anwendungen oder Umgebungen begrenzt. Die vorliegende Erfindung ist vorteilhafterweise in jeder Anwendung oder Umgebung einsetzbar, in der Echtzeitverarbeitung von großen Transaktionsdatenvolumen wünschenswert ist. Die nachfolgende Beschreibung der bevorzugten Ausführungsform dient dem Zweck der Darstellung und nicht der Einschränkung.

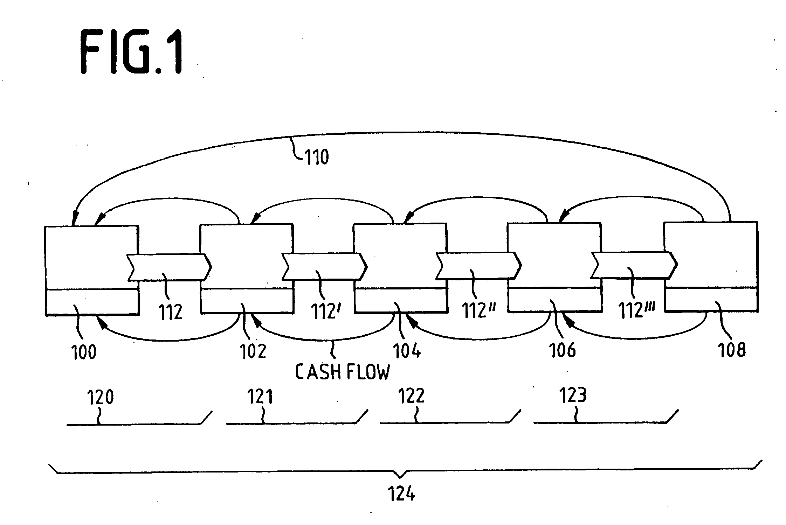

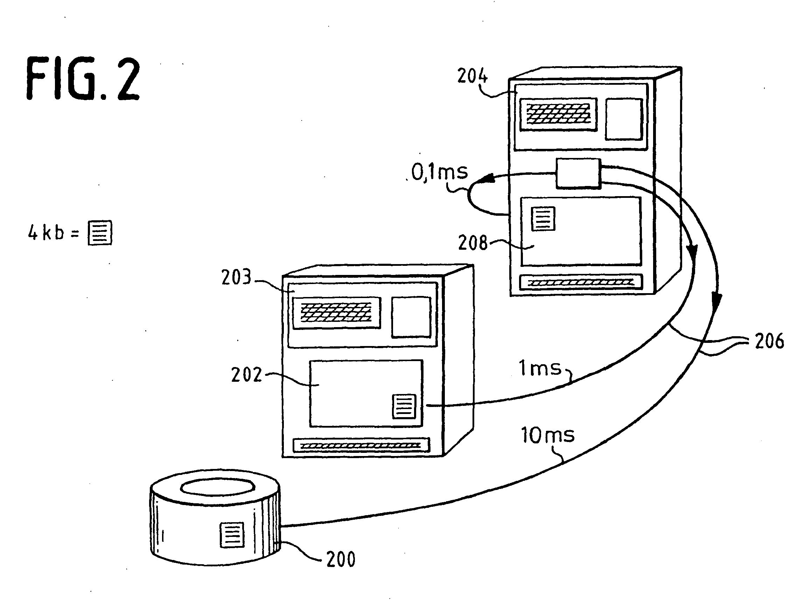

FIG. 1 zeigt ein Diagramm einer Zulieferungskettenumgebung, die sich für die Anwendung der vorliegenden Erfindung eignet. Der Fluß von Waren von dem Zulieferer 100 zu dem Verbraucher 108 mit den Zwischenknoten Hersteller 102, Vertreiber 104 und der Verkaufsoperation 106 sollte maximiert werden, um Optimalkostenlösungen zu erzielen. Die vorliegende Erfindung ermöglicht die besagten Optimierungskalkulationen in Echtzeit. FIG. 2 zeigt die aus dem Stand der Technik bekannten Verarbeitungsmethoden. Traditionell werden Transaktionsdaten entweder von der Festplatte 200 oder einem Datenbank-Serverpuffer 202 zu dem Anwendungsserver 204 übertragen. Wie aus der FIG. 2 ersichtlich, ist die Zeit für eine solche Übertragung 206 recht bedeutsam. Die vorliegende Erfindung reduziert diese Übertragungszeit wesentlich.

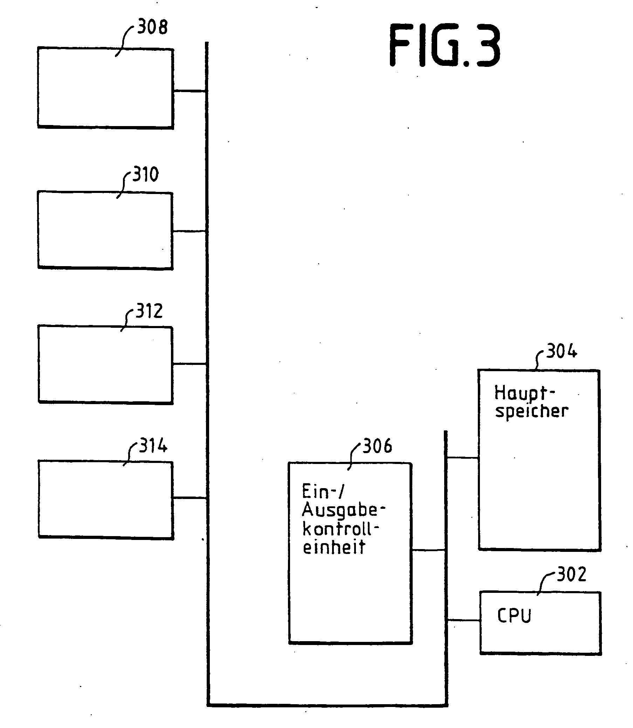

Die Erfindung kann auf einem Computersystem wie zum Beispiel dem System von FIG. 3 realisiert werden, das den Zentralprozessor 302, den Hauptspeicher 304, die Eingangs/Ausgangs-Steuerung 306, die Tastatur 308, das Anzeigegerät 310, die Bildschirmanzeige 312 und den Massenspeicher 314 (z.B. Festplatte, Wechselplatte, optische Platte, magnetooptische Platte oder Flash-Speicher) umfaßt.

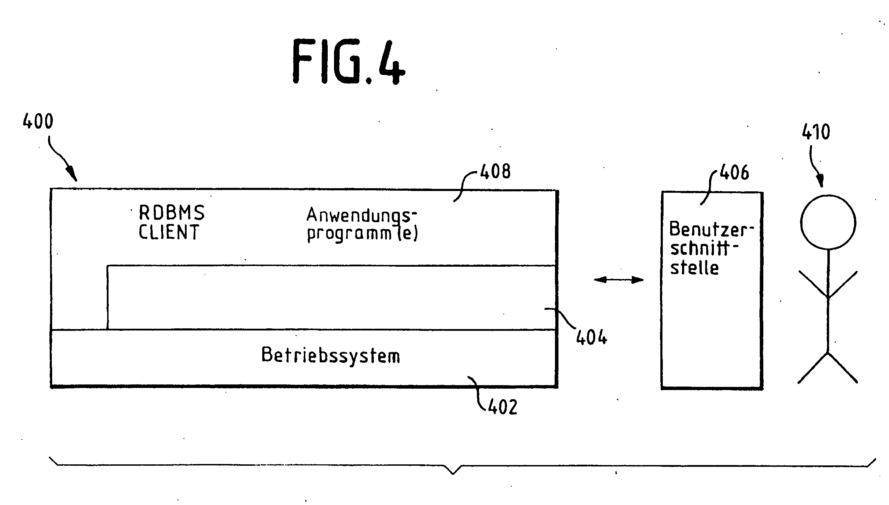

FIG. 4 zeigt ein Computersoftwaresystem zur Steuerung der Operationen des Computersystems. Das im Systemspeicher 400 und auf dem Massenspeicher, z. B. einem Plattenspeicher gespeicherte Softwaresystem enthält einen Kern bzw. ein Betriebssystem 402, bei dem es sich in dieser spezifischen Ausführungsform um Windows NT und das Shell 404 handelt. Eines oder mehrere Anwendungsprogramme, wie zum Beispiel Anwendungssoftware, kann zur Ausführung durch das System geladen werden (z. B. aus der Platte in den Hauptspeicher übertragen). Das System enthält außerdem die Benutzerschnittstelle 406 zum Empfangen von Benutzerbefehlen und Daten als Eingaben und zur Anzeige von Ergebnisdaten als Ausgabe. Bei der vorliegenden Ausführungsform umfaßt die erfindungsgemäße liveCash-Anwendungssoftware, wie weiter unten zu sehen sein wird, das hybride objekt-relationale Datenbanksystem 408.

Der Client kann ein beliebiger einer Anzahl von Datenbank-Frontends sein, darunter Powerbuilder, dbase, Paradox, Microsoft Access usw. Bei einer beispielhaften Ausführungsform umfaßt das Frontend SQL-Zugriffstreiber zum Zugriff auf SQL-Datenbank-Servertabellen in einer Client/Server-Umgebung.

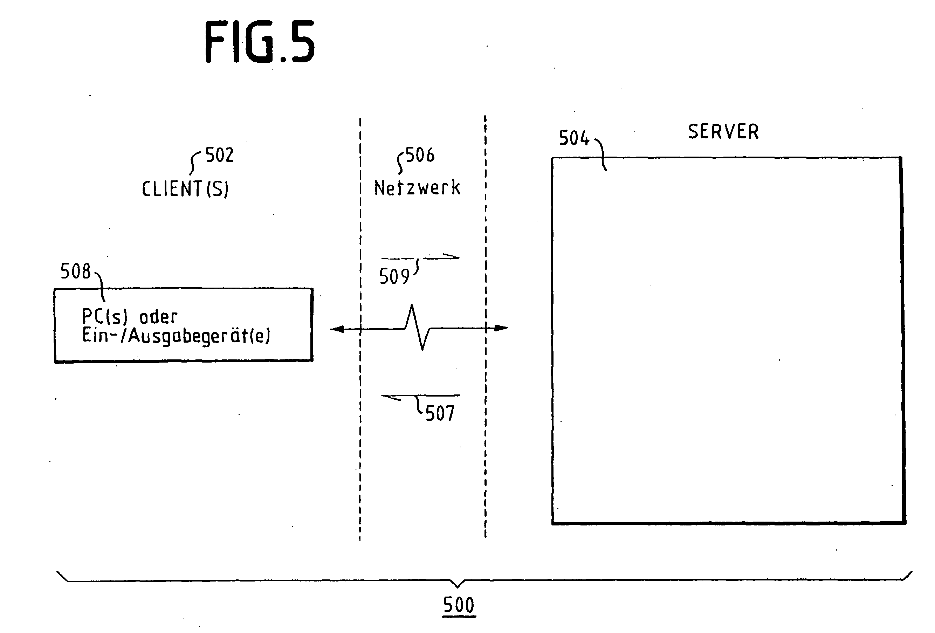

Obwohl die vorliegende Erfindung in einem einzigen Computer funktionieren kann (wie zum Beispiel in FIG. 3), wird die vorliegende Erfindung vorzugsweise in einem Mehrfach-Benutzer-Computersystem realisiert, wie zum Beispiel in einem Client/Server-System. FIG. 5 zeigt die allgemeine Struktur eines Client/Server-Systems 500 der bevorzugten Ausführungsform. Wie dargestellt umfaßt das System 500 einen oder mehrere Clients 502, die über das Netz 506 mit einem liveCash-Server 504 verbunden sind. Insbesondere umfassen der Client bzw. die Clients 502 einen oder mehrere selbständige Endgeräte 508, die unter Verwendung eines herkömmlichen Netzes 500 mit einem auf dem Server verankerten System verbunden sind.

Der liveCache-Server 504 wirkt im allgemeinen als ein unabhängiger Prozeß, der unter einem Server-Betriebssystem, z. B. Microsoft NT (Microsoft Corp in Redmond, Washington) auf dem Server abläuft. Das Netz 506 kann ein beliebiges einer Anzahl herkömmlicher Netzsysteme sein, z. B. ein lokales Netz (LAN) oder ein Fernnetz (WAN), so wie es in der Technik bekannt ist (z.B. unter Verwendung von Ethernet, IBM Token Ring oder dergleichen). Das Netz 506 enthält Funktionalität zur Verpackung von Client-Aufrufen in der wohlbekannten Sprache SQL (Structured Query Language) und etwaigen Parameterinformationen in einem zur Übertragung über ein Kabel oder eine Datenleitung zur Übermittlung zu dem liveCache-Server 504 geeignetes Format.

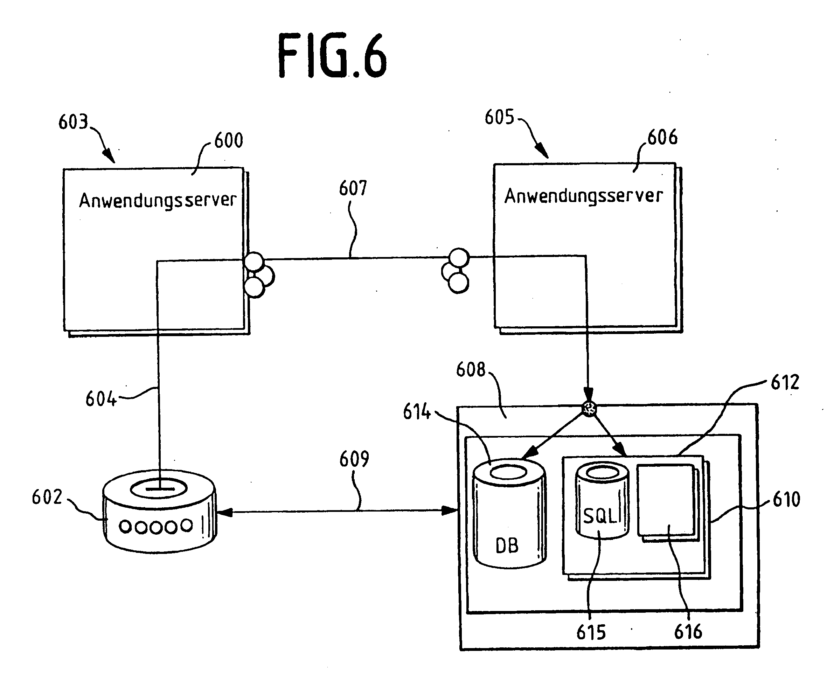

FIG. 6 ist ein Blockschaltbild des Rahmens, in dem der livecache-Server in der bevorzugten Ausführungsform implementiert wird. Das ERP-System 600 ist über die Datenstrecke 604 mit dem Haupt-ERP-Datenbankserver 602 verbunden. Das ERP-System 600 stellt ein Transaktions-management für die täglichen Operationen des Unternehmens bereit. Die besagten Transaktionen werden in den Haupt-ERP-Datenbankserver 602 geschrieben. Das ERP-System 600 ist außerdem mit dem Anwendungsserver 606 verbunden. Zwischen dem ERP-System 602 und dem Anwendungsserver 606 besteht eine Datenstrecke 607. Auf dem liveCache-Server 608 befindet sich ein sehr großer Hauptspeicher 610, in dem die liveCache-Anwendung 612 und das miteingeschlossene Datenbanksystem 614 abgelegt sind. Operationsdaten werden in einer traditionellen relationalen Struktur in der ERP-Datenbank 602 gespeichert.

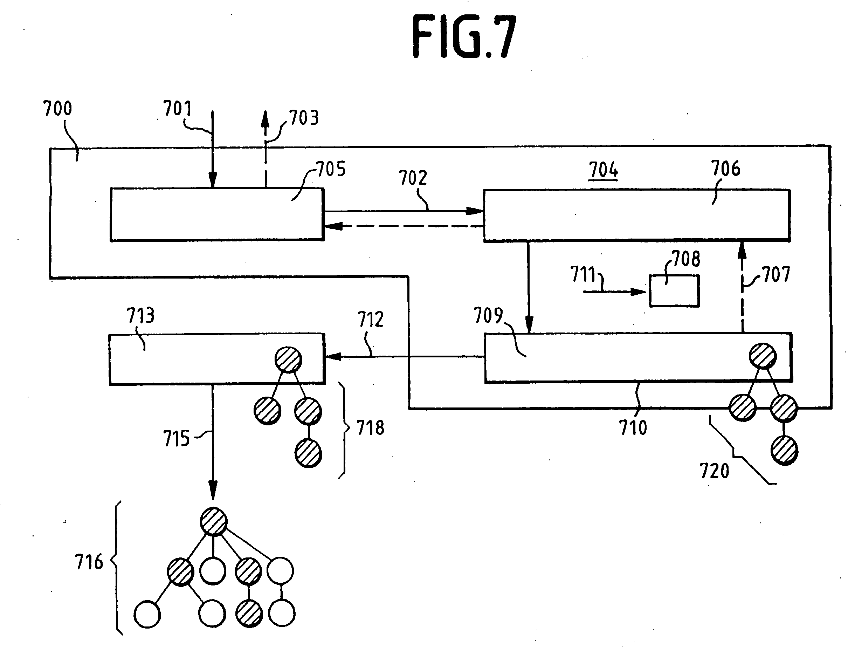

FIG. 7 zeigt eine beispielhafte Abfolge, die den Informationsfluß zeigt. Der Benutzer gibt die Bestellanforderung in das ERP-System 700 ein, die Anforderung wird zu dem liveCache-Server 704 übertragen 702, in dem die regelgestützte ATP-Funktion 706, ein Beispiel einer möglichen gespeicherten Prozedur, prüft, ob das Produkt verfügbar ist. Wenn dies nicht der Fall ist 708, dann erzeugt die Produktionsplanfunktion 710, ein weiteres Beispiel einer möglichen gespeicherten Prozedur, die Planungsbestellungen 712 und sendet sie zu dem ERP-System 700 zurück, in dem sie ausgeführt wird.

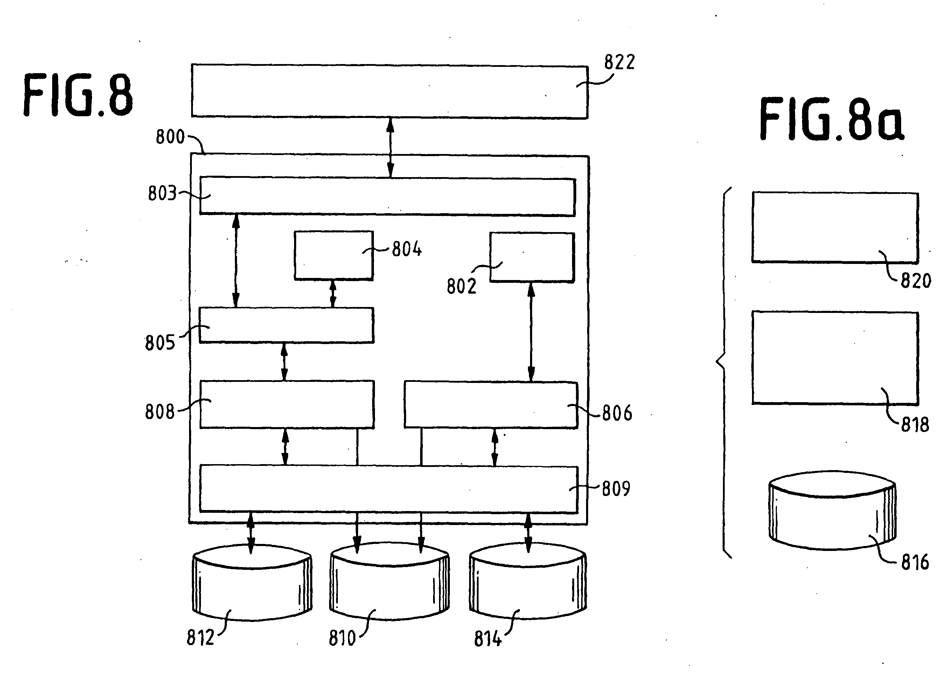

FIG. 8 zeigt ein ausführliches Diagramm der erfindungsgemäßen liveCache-Anwendung selbst. Der Hauptspeicher 800 enthält die liveCache-Anwendung. Die liveCache-Anwendung besteht aus dem OMS 802, der SQL-Klasse 804, der OMS-Basis 806, der SQL-Basis, die die B*-Bäume 808 enthält, und die Datenprotokollierung 810, die die Transaktions-Management funktionen des OMS sowie der SQL-Basis aufzeichnet. Der Speicher enthält außerdem einen relationalen Datenspeichermechanismus 812 sowie einen Objekt-Datenspeichermechanismus 814. Die COM-Objekte werden in der Registrierdatenbank 816 registriert und in dem COM-Speichercontainer 818 gespeichert. Die Typenbibliothek 820 führt die Informationen über die Schnittstellen, die das COM-Objekt für Eingabeparameter bereitstellt. Die Schnittstelle 822 ist das Mittel, durch das gespeicherte Prozeduren aufgerufen und Eingabeparameter bereitgestellt werden.

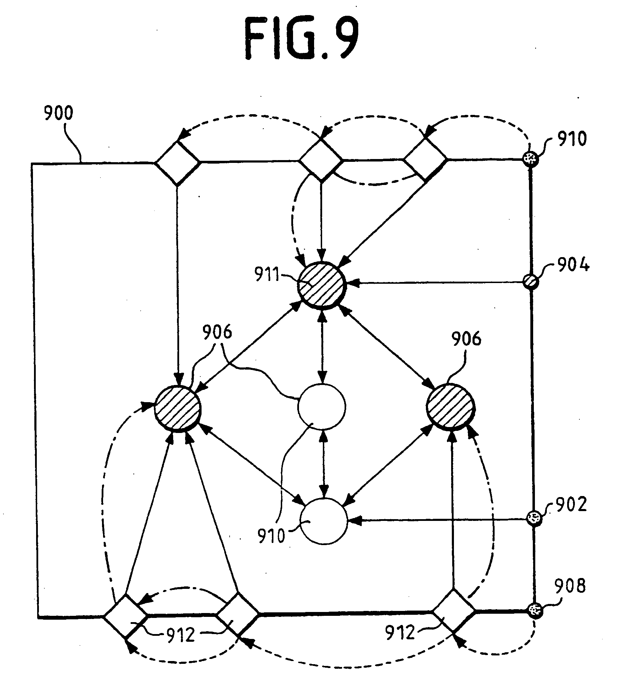

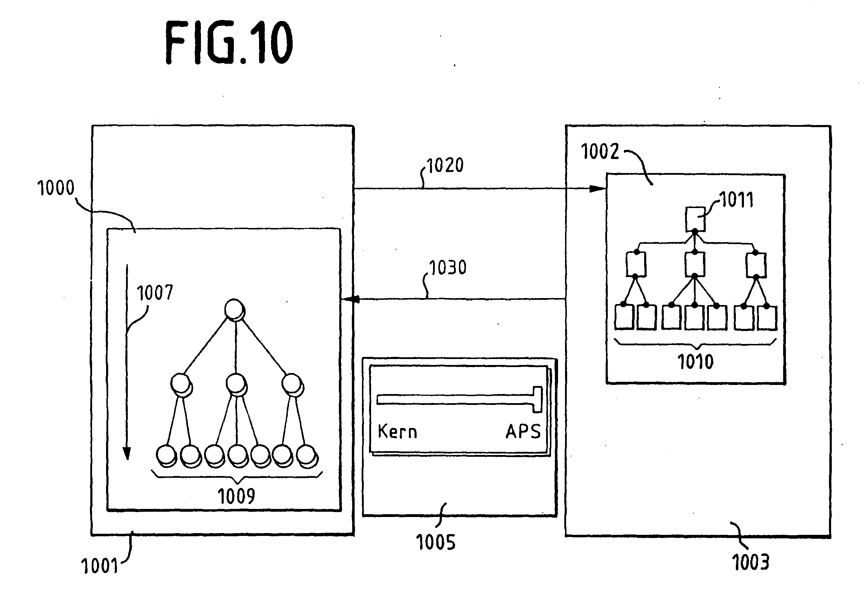

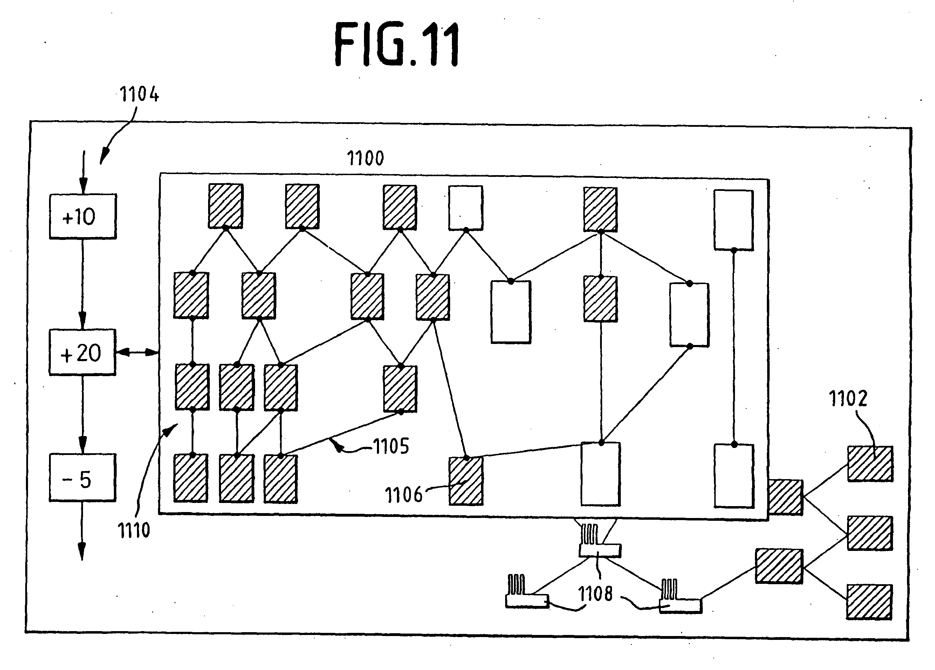

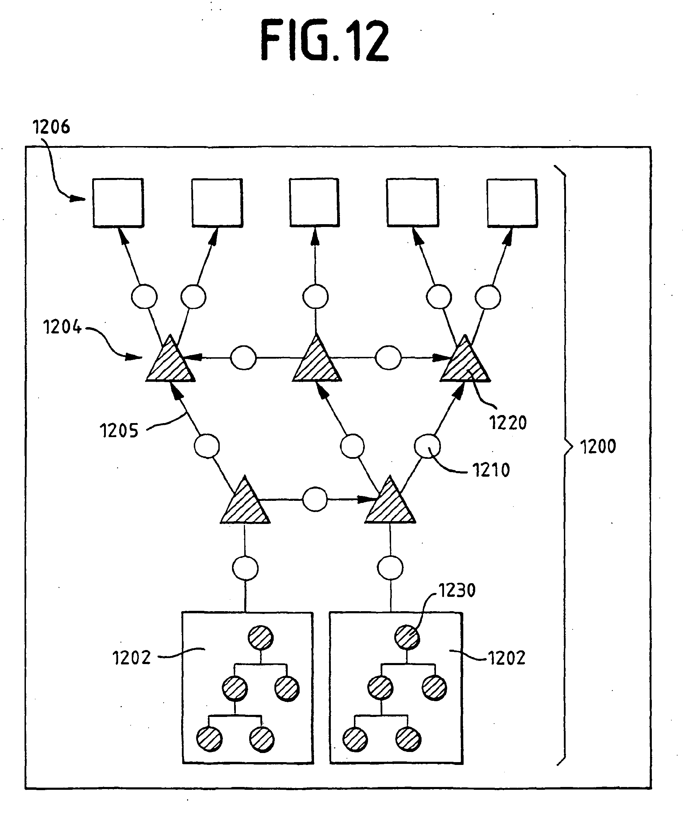

Gespeicherte Prozeduren sind als Methoden des COM-Objekts implementiert, die in dem COM-Speichercontainer 818 gespeichert sind. Die vorliegende Erfindung ermöglicht es dem Benutzer, eine dauerhafte Klasse einer Programmiersprache, z. B. eine C++-Klasse zu erzeugen, die eine Objektklasse ist, und sie in dem OMS 802 zu speichern. Die Objektklasse ist eine objektorientierte optimierte Datenstruktur zur Speicherung der relationalen Daten, die aus der Haupt-ERP-Datenbank importiert werden. Optimierte Datenstrukturen sind eine weitere Darstellung der aus der Haupt-ERP-Datenbank importierten Daten. Daten, die gemäß dieser Datenstruktur als Objekte gespeichert sind, sind Instanzen der Objektklasse. FIG. 9 zeigt ein Beispiel einer optimierten Datenstruktur. Bei der bevorzugten Ausführungsform ist die optimierte Datenstruktur die in der US-Patentanmeldung laufende Nr. 09/033840 vom 3.3.98 erwähnte und eignet sich zur Verwendung mit der vorliegenden Erfindung. FIG. 9 zeigt die Produktionsbestellung 900, die als ein Objekt in dem Objektdatenspeicher 814 gespeichert ist und aus einem Netz von Aktivitäten zusammengesetzt ist. Das Netz besitzt die erste Aktivität 902 und die letzte Aktivität 904 mit zwischengeschalteten Aktivitäten 906. Es besteht ein Erste_Eingabe Schnittstellen_Knoten 908, in dem Eingabeparameter bereitgestellt werden, sowie ein First_Output Interface_Node 910, der das Ergebnis der Produktionsbestellung 900 liefert. Die Aktivitäten und Verbindungen zwischen diesen sind in dem ERP-Datenbankserver 602 in traditionellem relationalen Format in Tabellen gespeichert. Diese traditionellen relationalen Daten 1000 werden zu dem liveCache-Server übertragen und auf die optimierte Datenstruktur 1002 abgebildet, von dem ein Beispiel in FIG. 10 abgebildet ist. Diese einzelnen Produktionsbestellungen werden miteinander verbunden, um ein Bestellnetz wie in FIG. 11 zu bilden. FIG. 12 zeigt ein Beispiel eines Szenarios, das auf das in FIG. 9, 10 abgebildet Datenmodell abgebildet werden kann. Das Netz 1200 besteht aus drei Lagen: Maschinen 1202, Verteilerzentren 1204 und Kundenanforderung 1206. Diese objektorientierten Datenmodelle, die in dem Objektspeichercontainer 814.im Hauptspeicher 800 (s. Fig: 8) gespeichert sind, erleichtern den Datenzugriff und ermöglichen eine schnelle Ausführung von Funktionen an diesen. Es können mehrere Klassen in dem Netz vorliegen. Es können Bezüge von Objekten einer Klasse auf Objekte einer anderen Klasse vorliegen. Jede gespeicherte Prozedur ist einer bestimmten Objektklasse zugeordnet und operiert nur mit Instanzen dieser Objektklasse, jede Objektklasse kann jedoch mehr als eine gespeicherte Prozedur aufweisen. Die gespeicherten Prozeduren sind z. B. in C++ geschrieben und als Methoden auf einem COM-Objekt wie nachfolgend beschrieben implementiert.

Die gewählte Methode zur Implementierung des liveCache unterscheidet sich von den in bestehenden ORDBMS verwendeten Ansätzen. Bei diesen herkömmlichen Methoden wurden die flachen Datenstrukturen (Tabellen) mit komplexen Datentypen verbessert. Da der Zugriff auf die Daten in diesen Systemen ausschließlich durch SQL erfolgt, wurde die lokale SQL-Implementierung mit Sprachkonstrukten erweitert, die einen Zugriff auf komplexe Daten ermöglichen. Dementsprechend müssen netzartige Strukturen 1200, die in FIG. 12 gezeigt sind, in relationale Muster (Tabellen) geschoben werden. Bei der vorliegenden Erfindung bleibt die Datenmodellierung der relationalen Umgebung und der objektorientierten Umgebung separat. SQL ist verfügbar zum Modellieren und Arbeiten in der relationalen Umgebung, während eine liveCache-Klasse (z. B. in der Form einer C++-Klasse) zum Modellieren und Arbeiten in der objektorientierten Umgebung existiert. Die komplexen Objekte werden in einem separaten Speichercontainer 814 gespeichert, der von der relationalen Datenbankspeicherstruktur 816 verschieden ist.

Der Benutzer definiert die besagte Objektklasse, wie zum Beispiel die oben als dauerhafte C++-Klasse bschriebene. Eine solche Definition erfolgt durch Objektmanagementfunktionen in C++ des OMS 802, wie zum Beispiel die Funktionen CREATE oder STORE. Zu den durch OMS 802 unterstützten Operationen gehören die folgenden: gespeichertes Objekt abrufen, gespeichertes Objekt ersetzen, ein gespeichertes Objekt hinzufügen, ein gespeichertes Objekt entfernen, einen neuen Typ erzeugen und einen existierenden Typ und alle Instanzen dieses Typs zerstören. Es besteht eine OMS-Klasse, die alle Funktionen enthält, mit denen objektorientierte Daten erzeugt und manipuliert werden. Nachdem die Objektklasse definiert wurde, werden alle relationalen Daten, die auf der Grundlage dieser Objektklasse modelliert werden, als Instanzen in der dauerhaften C++-Klasse in dem Objektspeichercontainer 814 gespeichert. Die OMS-Basis 806 verwaltet die Speicherung dieser Objekte.

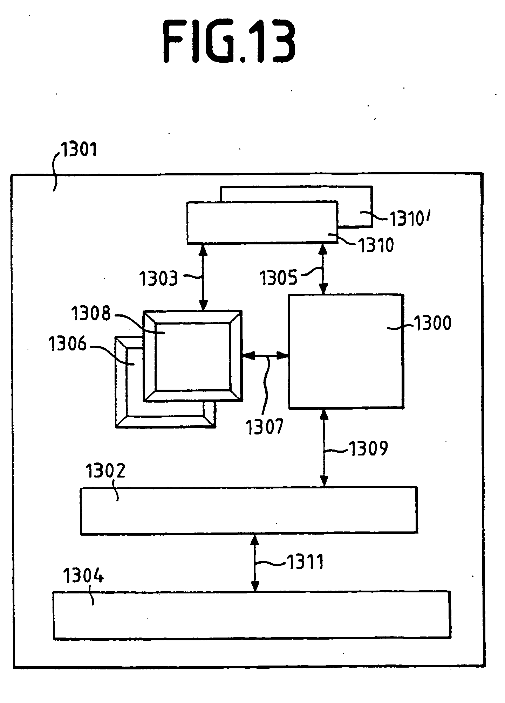

FIG. 13 zeigt ein Diagramm der OMS-Architektur. Das OMS 1300 ist mit der OMS-Basis 1302 verbunden, die wiederum mit dem Datencache 1304 verbunden ist. Man beachte, daß dies dasselbe OMS ist, das bereits als 802 bezeichnet wurde. Die privaten OMS-Caches 1306 sind Speicheradressen, an denen Prozesse ausgeführt werden. Jeder private OMS-Cache 1306 wird fest einer bestimmten Benutzersitzung zugeordnet. Wenn mehrere Benutzer auf das liveCache-System zugreifen, werden ihnen ihr eigener privater OMS-Cache 1306 zugewiesen, um ihre Anforderungen zu bearbeiten. Außerdem verfügen sie über ihre eigenen separaten Instanzen der gespeicherten Prozeduren, die für jede Benutzersitzung ablaufen. In der gespeicherten Prozedur befindet sich ein Aufruf für die Objektmanagementmethoden des OMS. Die C++-Methoden 1308 sind sowohl mit dem OMS 1300 als auch dem privaten OMS-Cache 1306 verbunden. Die Objektmanagementmethoden rufen die Objektdaten in den privaten OMS-Cache hinein ab. Wenn die Daten bereits in dem privaten OMS-Cache vorliegen, wird dieser Schritt umgangen.

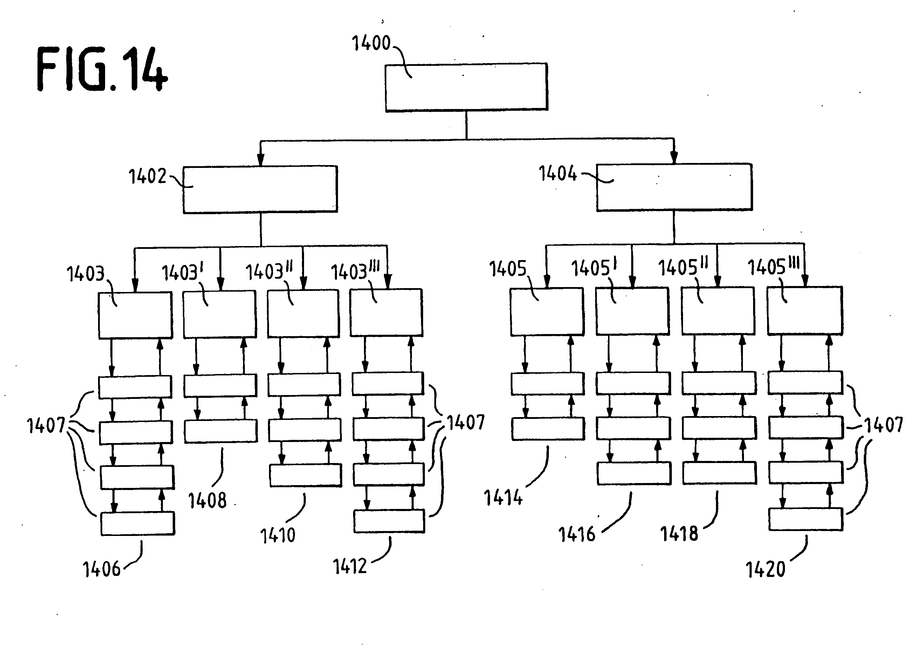

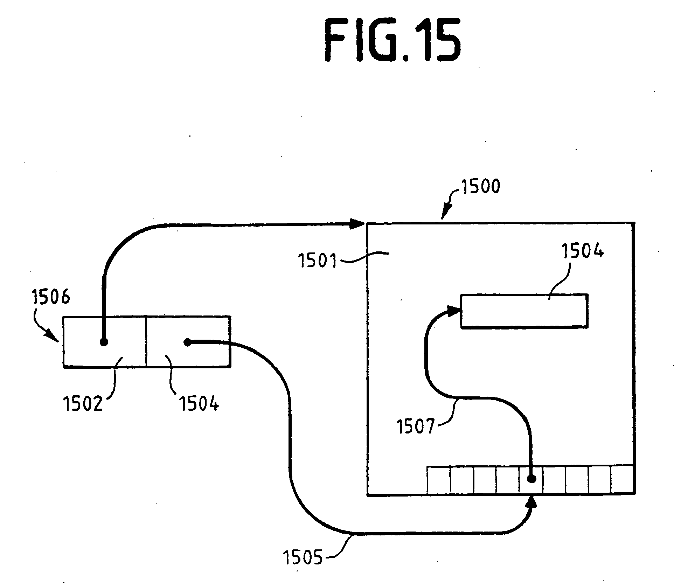

Die Funktionalität der OMS-Basis 1302 wird nachfolgend beschrieben. Sie verwendet aus dem Stand der Technik bekannte Speichertechnologie, die nachfolgend kurz besprochen wird. Wie in FIG. 14 gezeigt, besteht die OMS-Basis 806 aus Seitenketten 1400 für jede Objekklasse. Dies ist die Komponente, die für alle Eingangs-/Ausgangsoperationen zwischen dem Datencache 1304 und dem privaten OMS-Cache 1302 verantwortlich ist und deren physikalische Speicheradressen verwaltet. Die Objektdaten werden in Seiten in dem Objektspeichercontainer 814 gespeichert. Wenn zum Beispiel das OMS 1300 das Abrufen eines bestimmten spezifischen Datenobjekts auf einer spezifischen Seite p 1500 anfordert(s. Fig. 15), dann muß die OMS-Basis genau wissen, wo sich die Seite p 1500 im Hauptspeicher befindet. Der Benutzer der OMS-Basis 1302, das OMS 1300, muß jedoch nicht über diese Informationen verfügen. Stattdessen betrachtet das OMS den Speicher einfach als eine logische Ansammlung von Seitenmengen, die jeweils aus einer Ansammlung von Seiten fester Größe bestehen. Jede Seitenkette entspricht einer bestimmten Menge von Objekten, die gemäß einer Objektklasse gespeichert sind. FIG. 14 zeigt die Speicherungsarchitektur der OMS-Basis. Die Klasse a 1400 entspricht einer bestimmten optimierten Datenstruktur, die durch eine Objektklasse definiert wird. Die Klasse a 1400 ist weiterhin in Container a1 1402 und a2 1404 unterteilt, die wiederum aus einzelnen Seitenketten a1.1 1406, a1.2 1408, a1.3 1410 und a1.4 1412 sowie a2.1 1414, a2.2 1416, a2.3 1418 und a2.4 1420 bestehen. Jede Seite wird wiederum durch eine Seitennummer identifiziert, die in dem Speicher eindeutig ist. Verschiedene Seitenmengen sind elementfremd (d.h. haben keine Seiten gemeinsam). Die Abbildung zwischen Seitennummern und physikalischen Speicheradressen wird durch die OMS-Basis 1302 verstanden und aufrechterhalten.

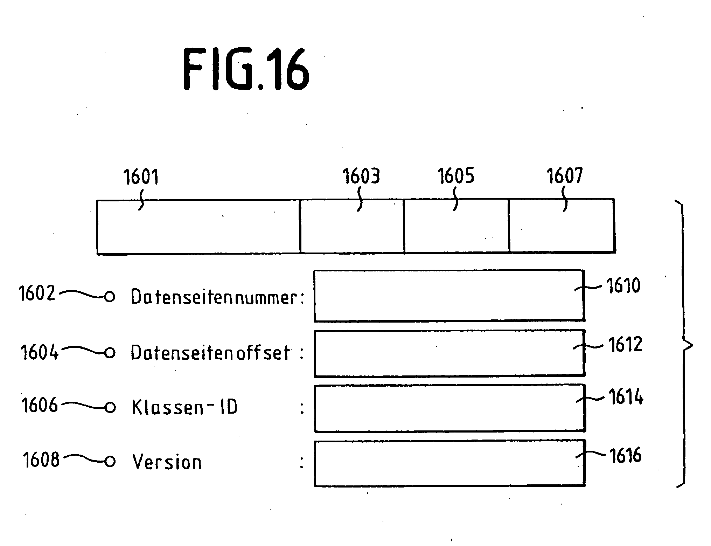

Das OMS verwendet die OMS-Basis 1302 dergestalt, daß für den Benutzer der Speicher aus einer Ansammlung gespeicherter Objekte besteht. Jede Seite enthält eines oder mehrere gespeicherte Objekte 1504. Jedes gespeicherte Objekt 1504 wird durch eine Objektkennung (OID) 1506 identifiziert. Die OID besteht aus Seitennummer 1502 und einem bestimmten für diese Seite eindeutigen Wert, bei dieser Ausführung dem Seitenoffset 1504. Die OID der dauerhaften Objekte, z. B. C++-Objekte enthält die Seitenadresse für das entsprechende Datenelement (Gesamtlänge 8 Byte: 4 Byte Seitennummer, 2 Byte Schlitznummer, 1 Byte Klassen-ID und 1 Byte Version). Das interne Seitenoffset kann aus der Schlitzposition und der festen Datenelementlänge berechnet werden. Die OID enthält keine physikalischen Objektadressen, sondern logische Objektadressen. Die OID 1600 der bevorzugten Ausführungsform ist in FIG. 16 abgebildet. Sie besteht aus einer Daten-Seitennummer 1602, einem Daten-Seitenoffset 1604, einer Klassen-ID 1606 und einer Version 1608. Die Daten-Seitennummer 1602 bezieht sich auf die Datenseite des Objekts, die im Hashverfahren auf eine Daten-Cacheadresse verwiesen wird. Das Daten-Seitenoffset 1604 ist das Offset des Objekts auf der Datenseite. Die Klassen-ID 1606 identifiziert, zu welcher bestimmten Klasse das Objekt gehört. Anwendungen verwenden immer die OID zur Gewinnung eines gültigen Zugriffs auf das Objekt.

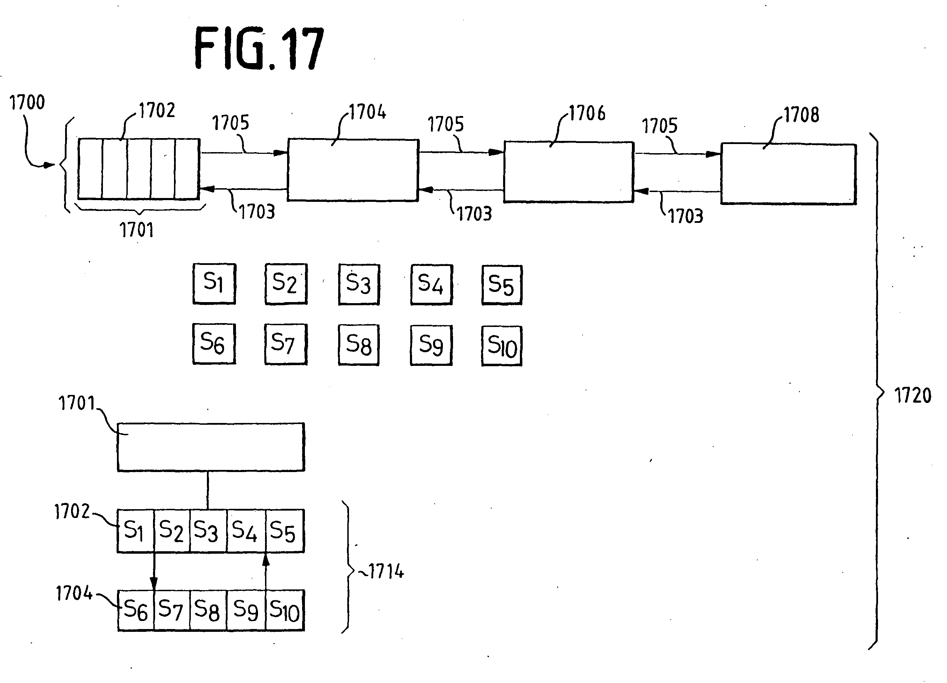

Es folgt ein in FIG. 17 dargestelltes vereinfachtes Beispiel des Speichermechanismus des liveCache. Zunächst seien überhaupt keine Daten in der Datenbank gespeichert. Es besteht nur eine Seitenmenge 1700, die Freiraum-Seitenmenge, die alle vier Seiten 1702-1708 auf der Platte enthält. Die Seiten sind sequenziell von eins an durchnumeriert und auf eine Seite passen fünf Objekte. Bei der bevorzugten Ausführungsform führt jede Seite mehrere Objekte. Beispielsweise ist es erwünscht, zehn Zuliefererobjekte 1710-1730 zu speichern. Das OMS registriert die Klasse, und erzeugt dadurch den Objektcontainer 1716. Als erstes fordert das OMS die Erzeugung der "Zulieferer-Objektseitenmenge" 1714 für Zuliefererobjekte an. Es registriert die Klasse mit Hash-Key. Eine neue Instanz der Klasse wird zusammen mit einer entsprechenden OID erzeugt. Die OMS-Basis entfernt die ersten beiden Seiten 1702, 1704 aus der Freiraum-Seitenmenge und labelt diese als "Zulieferer-Objektseitenmenge". Es werden zehn Zuliefererobjekte 1710-1730 in den zwei Seiten gespeichert. Wenn in dieser Situation das OMS ein neues Zuliefererobjekt einfügt, dann findet die OMS-Basis die erste freie Seite aus der Freiraum-Seitenmenge und fügt diese zu der "Zulieferer-Objektseitenmenge" hinzu. Wenn das OMS das gespeicherte Objekt löscht, markiert die OMS-Basis den Raum als verfügbar (Flag in der Seite löschen), und der Raum wird in einer Kette von verfügbaren Räumen als verfügbar aufgezeichnet. Wenn alle Objekte auf einer Seite gelöscht wurden, kann diese Seite zu einem Seitenmanagement weitergeleitet werden.

Einfügungen erfolgen in dem ersten freien Objektrahmen. Es gibt eine Kette von Seiten, die freie Objektrahmen enthält. Jede Seite, die einen freien Objektrahmen aufweist, ist Teil dieser Kette. Updates benötigen keinen zusätzlichen Speicher und bewirken somit keine Überlastungen von dem Speicherinneren aus. Neue Einfügungen verwenden zunächst die Positionen gelöschter Datenelemente, bevor sie Raum am Ende des Containers und schließlich eine neue Seite anfordern. Als Option kann für den Typ definiert werden, daß neue Einträge nur am Ende eingefügt werden können. In diesem Fall wird der Raum aus den gelöschten Einträgen nicht wieder verwendet. Völlig leere Seiten werden aus der Kette entfernt und an die Freiraum-Seitenmenge zurückgegeben.

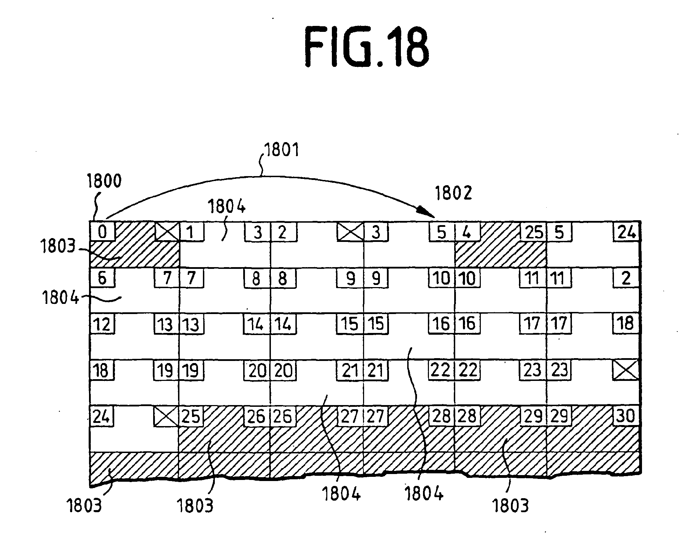

Die logische Abfolge von Seiten in einer gegebenen Seitenmenge muß nicht durch physikalische Benachbarung, sondern durch Zeiger wie in FIG. 18 gezeigt dargestellt werden. Figur 18 zeigt eine Folge von Seiten. Jede Seite enthält den Seitenkopf 1800, eine Menge von Steuerinformationen, zu denen die Speicheradressen der Seite gehört, die dieser Seite in der logischen Folge unmittelbar nachfolgt. Die Seite mit dem Seitenkopf 1800 muß nicht physikalisch der nächsten logischen Seite mit dem Seitenkopf 1802 benachbart sein. Die Seitenköpfe werden durch die OMS-Basis verwaltet und sind dadurch für das OMS selbst nicht sichtbar. Nur die Objekte sind für das OMS sichtbar.

Kurz gefaßt stellt die OMS-Basis ein Seitenmanagement für die dauerhaften Objektcontainer bereit. Es besteht aus doppelt verbundenen Ketten von Datenseiten fester Größe. Man beachte, daß eine einzelne Klasse aus mehreren Containern bestehen kann. Sie kann durch Klassenattribute partitioniert werden. Die Klasse 1606 enthält außerdem die Container-id, die dem OMS mitteilt, in welchem Container sich das Objekt befindet. Die Objekte werden in Objektrahmen (Datenelementen) fester Länge gespeichert, weil alle Instanzen einer Klasse, z. B. einer C++-Klasse dieselbe Größe aufweisen. Dies liefert den Zugriff auf konsistente Objektzustände über die Protokollierung. Die Objektrahmen werden wiederverwendet. Leere Objektrahmen werden in einer separaten Freikette gehalten. Die maximale Objektlänge wird durch die Größe einer Datenseite beschränkt.

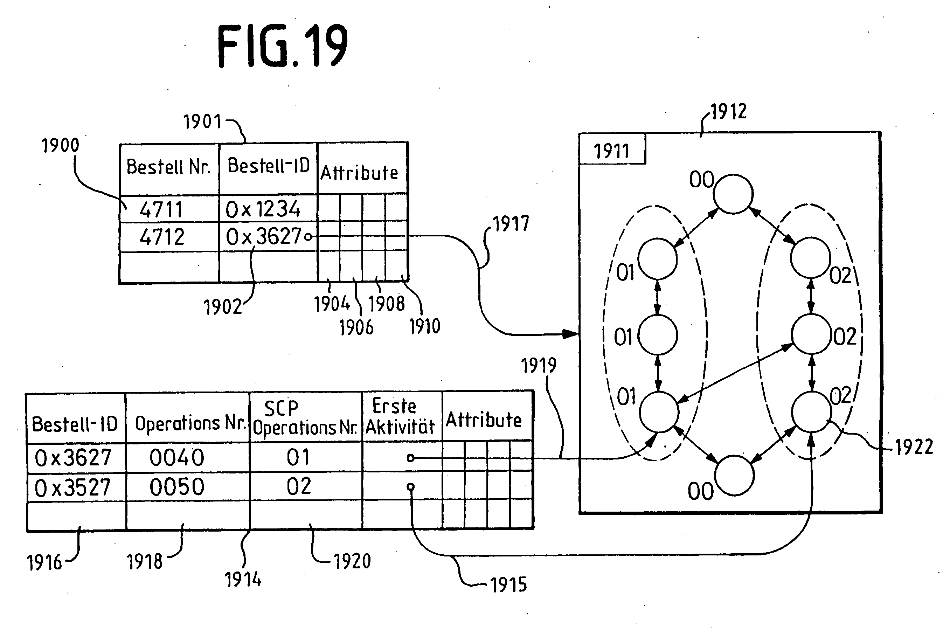

Bei der bevorzugten Ausführungsform, die die oben besprochene optimierte Datenstruktur verwendet, wird die OID für jede Objektinstanz in traditionellem relationalem Format gespeichert. FIG. 19 zeigt die relationale Tabellenstruktur zur Speicherung der OID. Es besteht eine Schlüsselwertspalte, die aus der Bestellnummer 1900 besteht. Die entsprechende OID 1902 wird als eine zweite Spalte in der Tabelle gespeichert. Es gibt weitere Spalten 1904-1910, mit denen Objektattribute gespeichert werden können. Die OID 1902 zeigt auf das Bestellobjekt 1904, das in dem Objektspeichercontainer 814 (s. Fig. 8) gespeichert ist. Wenn der Benutzer auf die Aktivitäten in dem Bestellobjekt 1912 zugreifen möchte, kann es eine zusätzliche Tabelle 1914 geben, die aus der ersten Spalte 1916 mit der OID, der zweiten Spalte 1918 mit der Operationsnummer, der dritten Spalte 1920 mit einer weiteren Bestellnummer und Zeigern auf Aktivitäten 1922 besteht. Wenn die relationalen Daten auf die optimierten Datenstrukturen abgebildet und als Objekte über das OMS 802 in dem Objektspeichercontainer 804 gespeichert wurden, und die gespeicherten Prozeduren in dem COM-Objektcontainer gespeichert und in der Registrierdatenbank registriert wurden, kann der Benutzer das liveCache-System zur Verarbeitung von Daten anfragen. Die Anfrage auf Daten erfolgt durch die gespeicherten Prozeduren, wodurch Objektmanagement-methoden aufgerufen werden.

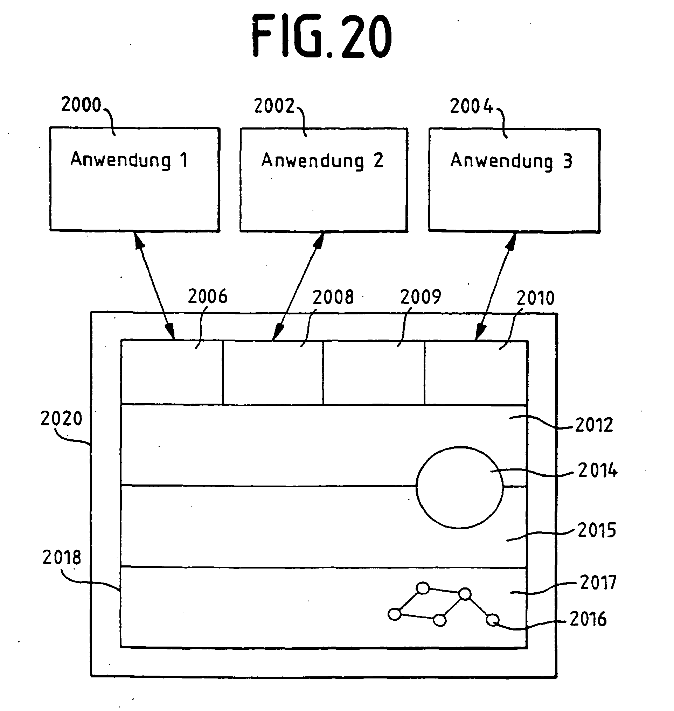

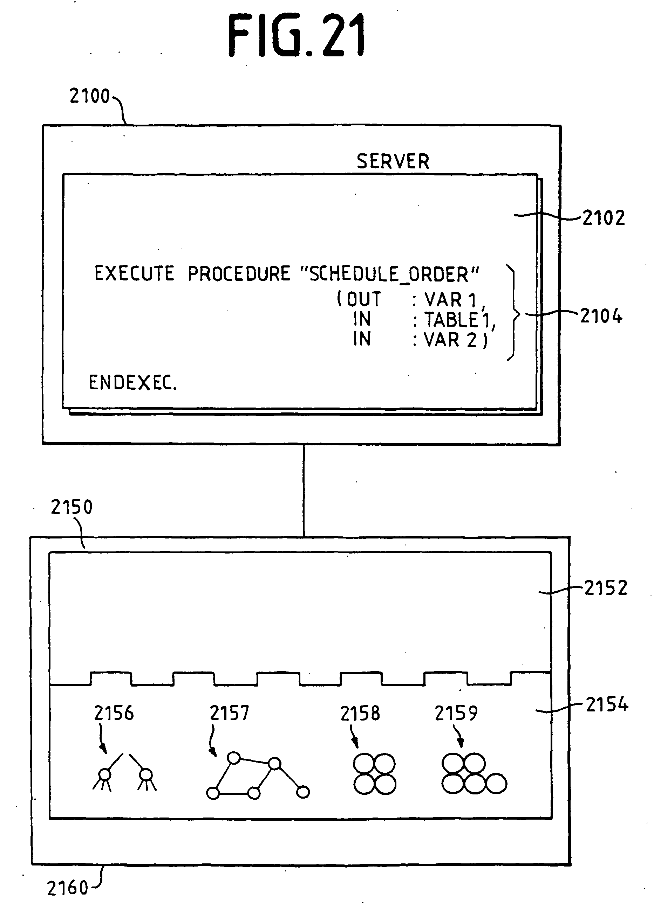

FIG. 20 zeigt eine weitere Übersicht der vorliegenden Erfindung. Die Anwendungen 2000, 2002, 2004 fragen das liveCache durch ihre entsprechenden privaten Sitzungen 2006, 2008, 2010 durch die gespeicherten Prozeduren an. Die Anfragen werden in der SQL-Schicht 2012 interpretiert, um die entsprechenden Methoden von COM-Objekten 2014 sowie Daten 2016 in der Datenschicht 2018 über die OMS-Schicht 2020 aufzurufen. Gespeicherte Prozeduren greifen auf Daten zu, die Teil des privaten OMS-Cache sind, und es liegt daher bei dem OMS, die Daten aus dem Daten-Cache in den privaten OMS-Cache abzurufen. Die Anwendung ruft liveCache-Funktionalität durch SQL durch Aufrufen gespeicherter Prozeduren ab. Die z. B. in der Programmiersprache C++ geschriebenen COM-Objekte sind mit der OMS-Schicht in den entsprechenden privaten OMS-Cache so verbunden, daß keine Datenübertragung zwischen Adressräumen stattfindet. Wie in FIG. 21 gezeigt, gibt das Anwendungsprogramm 2102 in dem Anwendungsserver 2100 die SQL-Anfrage 2104 aus, die die Funktion aus der COM-Objektspeicherung aufruft, in der sie dynamisch in den diesem bestimmten Anwendungsprogramm 2102 zugewiesenen privaten OMS-Cache eingebunden wird. Diese SQL-Anfrage umfaßt einen Aufruf für die gespeicherten Prozeduren, die als eine Methode eines COM-Objekts gespeichert ist. Die Objektdaten werden aus der gespeicherten Prozedur heraus aufgerufen. Die SQL-Anfrage besteht in der bevorzugten Ausführungsform aus zwei Teilen. Die gespeicherte Prozedur wird aufgerufen und dynamisch an den liveCache-Kern angebunden. Das dynamische Binden ermöglicht die Operation an den Daten ohne kostspielige Adressenraumwechsel. Der private OMS-Cache ist Teil der Instanz des COM-Objekts. Das COM-Objekt ist die Umgebung, in der sich der private OMS-Cache befindet. Die Anfrage enthält eine bestimmte Menge von Objekten, die für die Verarbeitung notwendig sind. Die Anfrage ruft die Datenobjekte durch einen bestimmten Bezug, wie zum Beispiel die Produktions-Bestellnummer 900, auf. Die Nummer wird gefunden, und die entsprechende OID wird in der Tabelle 2104 aufgefunden. Die OID wird dann auf eine physikalische Speicheradresse abgebildet. An diesem Punkt wird eine Kopie des Objekts in demselben Adressraum zur Verfügung gestellt, in dem seine zugeordnete gespeicherte Prozedur zur Verfügung gestellt wurde. Die in die Funktionen einzugebenden Parameterdatentypen können z. B. skalare C++-Datentypen (int, float, char, arrays usw.), flache Strukturen oder interne ABAP Tabellen sein.

Zur Steigerung der Geschwindigkeit, mit der der liveCache-Server bestimmte Objekte speichert, abruft oder darstellt, führt der Server einen oder mehrere Datenbankindizes auf die Tabelle. Ein Datenbankindex, der in der Regel als eine B-Baumdatenstruktur geführt wird, ermöglicht die Organisation der Dätenelemente auf viele verschiedene Weisen, abhängig von den besonderen Bedürfnissen des Benutzers. Ein Index kann als eine Datei konstruiert werden, die Index-Schlüsselwerte zusammen mit eindeutigen Datenelementnummern speichert. Die letztere ist eine Datengröße, die aus einem oder mehreren Feldern aus einem Datenelement zusammengesetzt ist; die Werte werden verwendet, um die Datenbankdatei-Datenelemente (logisch) durch eine bestimmte gewünschte Ordnung (Indexausdruck) anzuordnen. Die letzteren sind eindeutige Zeiger oder Erkennungen für die tatsächliche Speicherstelle jedes Datenelements in der Datenbankdatei. Der Bezug auf beide erfolgt intern durch das System zum Auffinden und Anzeigen von Datenelementen in einer Datenbankdatei. Diese Bäume sind in der SQL-Basis 808 gespeichert, die in FIG. 8 gezeigt ist. Eine andere Möglichkeit besteht darin, der dauerhaften Klasse, z. B. der C++-Klasse einen Hash-Key zuzuweisen. Auf diese Weise stellt das OMS einen Hashindex für die Transformation des Schlüssels in einer OID bereit. Sie können sich über den Schlüssel oder die OID auf ihr Objekt beziehen.

Der OMS-Cache stellt einen privaten Cache für dauerhafte Objekte bereit, die sitzungsspezifisch sind. Die OID wird auf eine Cache-Adresse abgebildet, an der sich das Objekt befindet. Der erste Zugriff auf ein Objekt erfolgt über die OMS-Basis. An diesem Punkt wird eine Objektkopie in den privaten Cache eingesetzt. Spätere Zugriffe verwenden die Objektkopie in dem privaten Cache durch Verweis der OID auf eine Speicheradresse in dem privaten Cache im Hashverfahren.

Wenn die Objektdaten aus der Speicherung durch das OMS und die OMS-Basis über den oben erläuterten Mechanismus abgerufen werden, stellt die bevorzugte Ausführungsform außerdem ein Transaktionsmanagement bereit, die z. B. der in relationalen Modellen durch das Objektmanagement system (OMS) verwendeten gleicht. Ein solches Management ist aus dem Stand der Technik bekannt, es wird jedoch im folgenden eine kurze Beschreibung der bevorzugten Ausführungsform gegeben.

Eine Transaktion ist eine logische Arbeitseinheit. Wenn eine Transaktion aus zwei Updates besteht, ist es klar, daß es nicht zulässig sein darf, daß ein Update ausgeführt wird, das andere aber nicht, weil dies die Datenbank in einem inkonsistenten Zustand zurücklassen würde. Die Systemkomponente, die diese Atomizität bereitstellt, ist das Objektmanagementsystem, das Äquivalent eines Transaktionsmanagers in traditionellen Systemen. Das OMS besitzt zwei integrale Operationen COMMIT und ROLLBACK.

Die Transaktion COMMIT signalisiert ein erfolgreiches Transaktionsende. Sie teilt dem OMS mit, daß eine logische Arbeitseinheit erfolgreich abgeschlossen wurde, sich die Datenbank wieder in einem konsistenten Zustand befindet und alle durch diese Arbeitseinheit vorgenommenen Updates nun übergeben oder permanent gemacht werden können. Die Transaktion ROLLBACK signalisiert ein erfolgloses Transaktionsende: sie teilt dem Transaktionsmanager mit, daß ein Fehler aufgetreten ist, sich die Datenbank in einem inkonsistenten Zustand befinden könnte und alle durch die logische Arbeitseinheit bisher vorgenommenen Updates "zurückgefahren" oder rückgängig gemacht werden müssen. Wenn eine der beiden Updates eine Fehlerbedingung angibt, wird ein ROLLBACK ausgegeben, um alle bisherigen Änderungen rückgängig zu machen. Das OMS führt die Protokollierung 810, wie oben in FIG. 8 gezeigt, auf einem Speichermedium, z. B. einer Speicherplatte, auf der Einzelheiten aller Updateoperationen - insbesondere Vor- und Nachwerte des aktualisierten Objekts - aufgezeichnet werden. Wenn es somit erforderlich wird, ein bestimmtes Update rückgängig zu machen, kann das OMS den entsprechenden Protkollierungseintrag verwenden, um das aktualisierte Objekt auf seinen vorherigen Wert zurückzusetzen.

Die Transaktion beginnt mit der erfolgreichen Ausführung einer Anweisung "begin transaction" und endet mit der erfolgreichen Ausführung einer COMMIT- oder einer ROLLBACK-Anweisung. COMMIT richtet einen Übergabepunkt ein. Ein Übergabepunkt entspricht dem Ende einer logischen Arbeitseinheit. ROLLBACK fährt dagegen die Datenbank zurück zu dem Zustand, in dem sie sich bei BEGIN befand. Wenn ein Übergabepunkt eingerichtet wurde, werden alle Änderungen seit dem vorherigen Übergabepunkt permanent gemacht. Wenn eine Transaktion erfolgreich ist, garantiert das OMS, daß die Updates auch dann permanent in der Datenbank gespeichert werden, wenn das System sofort abstürzt. Die Neustartprozedur des OMS-Systems installiert diese Updates in der Datenbank; sie ist in der Lage, die zu schreibenden Werte durch Untersuchen der betreffenden Einträge in der Protokollierung zu entdecken.

Das OMS der bevorzugten Ausführungsform besitzt mehrere Zugriffsmethoden. "Deref Object" bezieht sich auf ein Objekt in dem OMS-Cachepunkt. "Deref Object by key" kopiert ein Objekt mit Bezug über den Hashindex in den OMS-Cache. "Scan object" gibt das nächste Objekt aus dem Objektcontainer zurück. "Lock object" verriegelt das Objekt. "Refresh object" kopiert gegebenenfalls den neuesten Stand eines Objekts in den OMS-Cache. "Release object" löscht ein Objekt aus dem OMS-Cache.

Die Operationen des Sitzungsmanagements werden als Methoden z. B. einer C++-Klasse implementiert. In der bevorzugten Ausführungsform gibt es drei Arten des Transaktionsbetriebs. In der impliziten Betriebsart werden Verriegelungen implizit angefordert, und das OMS setzt Verriegelungen für Objektkopien in den privaten Cache. In der optimistischen Betriebsart verwendet "Deref object" die konsistente Ansicht. Außerdem sind die Operationen Lock und Store auf den privaten Cache-Level beschränkt, und es werden keine liveCache-Daten verändert. In der pessimistischen Betriebsart verwendet "Deref Object" immer noch die konsistente Ansicht, die Operationen Lock und Store wirken sich jedoch unmittelbar auf gemeinsam benutzte Objekte aus. In einer konsistenten Ansicht werden die vollständigen Objektdaten "virtuell" am Beginn der Transaktion eingefroren (primsh, 17).

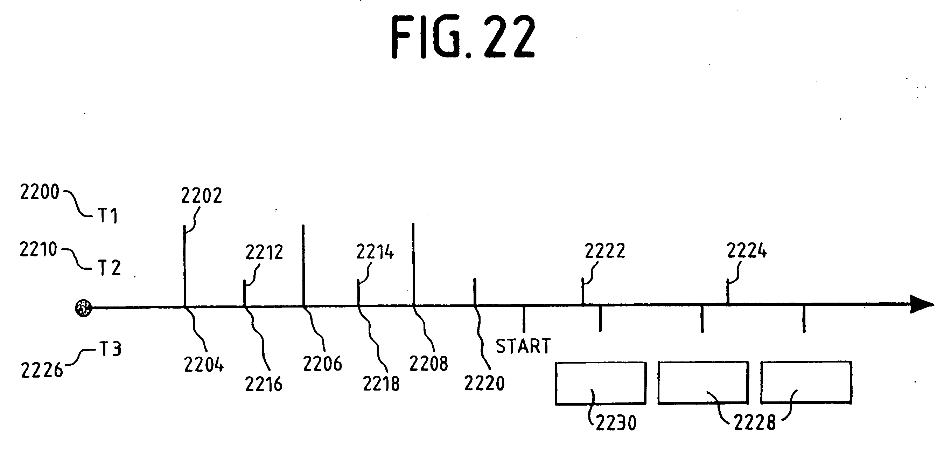

FIG. 22 ist ein Beispiel des oben beschriebenen Transaktionsmanagements. Wenn die Transaktion T1 2200 das Objekt A 2202 erfordert, wird es verriegelt 2204. Nach dem Ende der Verarbeitung wird das Objekt A 2202 wieder gespeichert 2206. Wenn die Speicherfunktion beendet ist, wird die Transaktion übergeben 2208. Die Transaktion T2 2210 erfordert das Objekt B 2212 und das Objekt C 2214 zur Verarbeitung. Beide werden während der Verarbeitung verriegelt 2216, 2218. Nach der besagten Verarbeitung werden sie beide gespeichert 2220, 2222, und die Transaktion wird dann übergeben 2224.

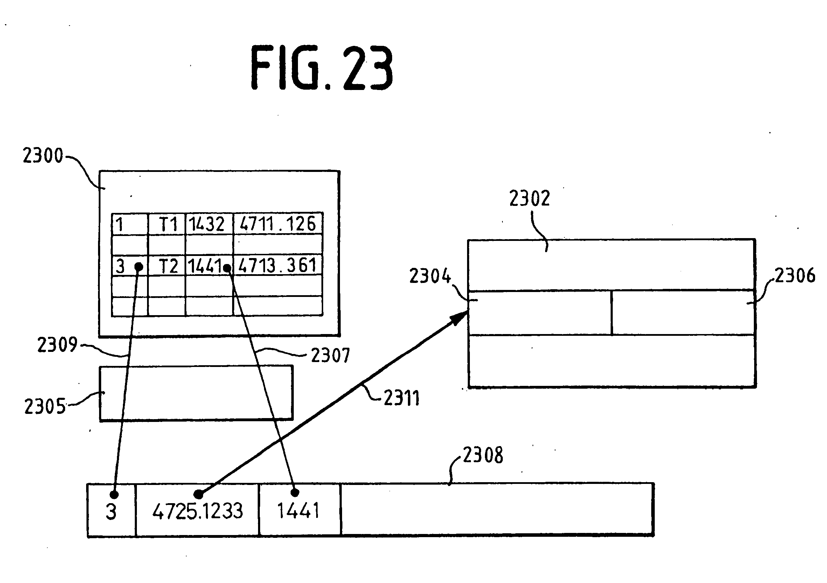

Die Transaktion T3 2226 erfordert das Objekt A 2202, das Objekt B, 2212 und das Objekt C 2214 zur Verarbeitung. Da es jedoch beginnt, bevor die Transaktion T2 übergeben hat 2226, muß sie mit einem alten Bild von B und C 2228 fortfahren. Sie kann mit dem letzten Bild von A 2230 fortfahren. Die Protokollierung 810 ist in FIG. 23 gezeigt. Die Transaktionsmanagementtabelle 2300, die im Stand der Technik bekannt ist, ist abgebildet. Die Protokolldatei 2302 speichert sowohl das alte Objektbild 2304 als auch das neue Objektbild 2206, bis die Transaktion übergeben wird.

Das System ist außerdem zur Datensynchronisierung nach der anfänglichen Population des liveCache-Systems in der Lage. Nach dem anfänglichen Transfer von Daten aus der Haupt-ERP-Datenbank 702 in den liveCache-Server 706 bei Aktivierung des liveCache, werden Daten in dem liveCache aktualisiert gehalten, um die Daten in der Haupt-ERP-Datenbank widerzuspiegeln. Während Transaktionen in dem ERP-System 700 auftreten, werden diese Transaktionen in die ERP-Datenbank 702 geschrieben, um Veränderungen des Inventarlevels, der Ressourcenverfügbarkeit nach jeder Transaktion widerzuspiegeln. Diese Datenänderungen werden gleichzeitig an den im Hauptspeicher des liveCache-Servers geführten Daten z. B. über die C++-Funktionen des OMS vorgenommen.

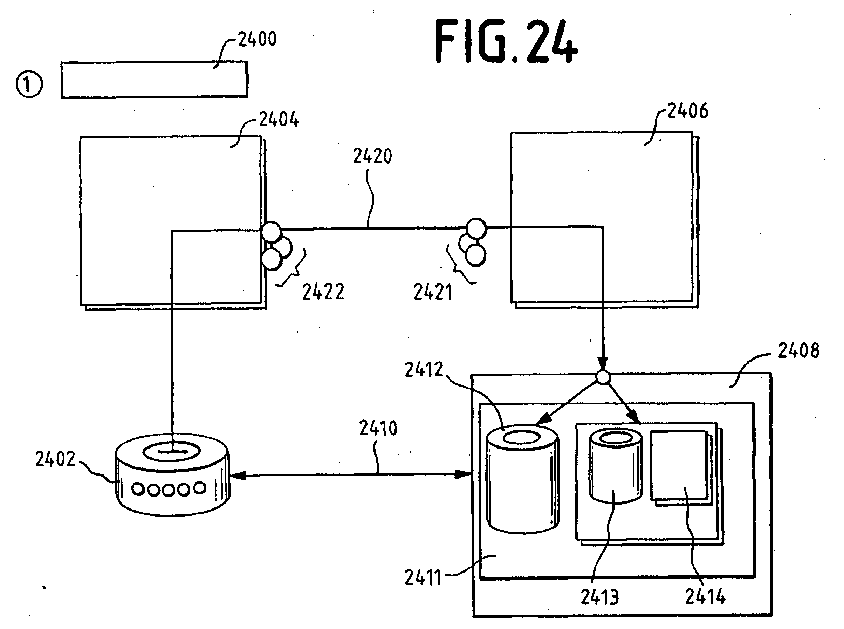

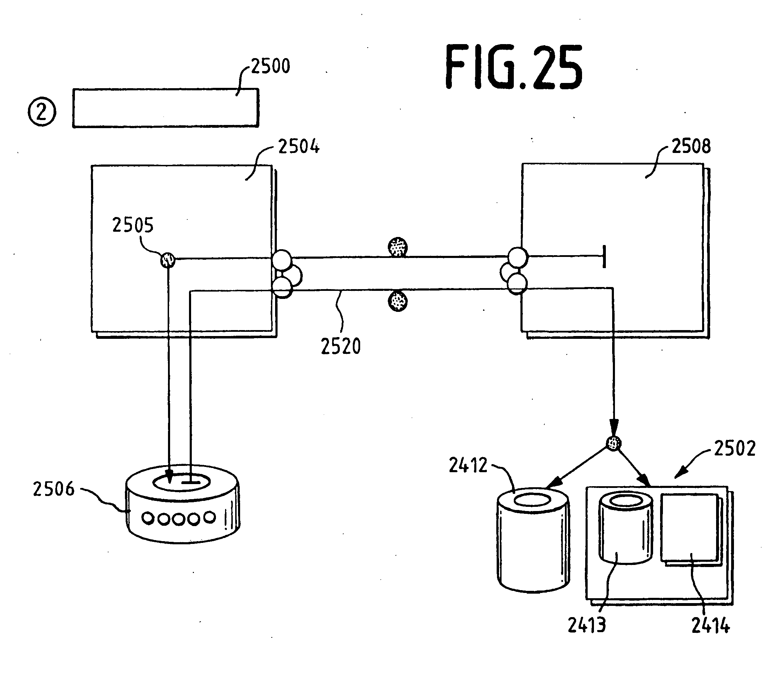

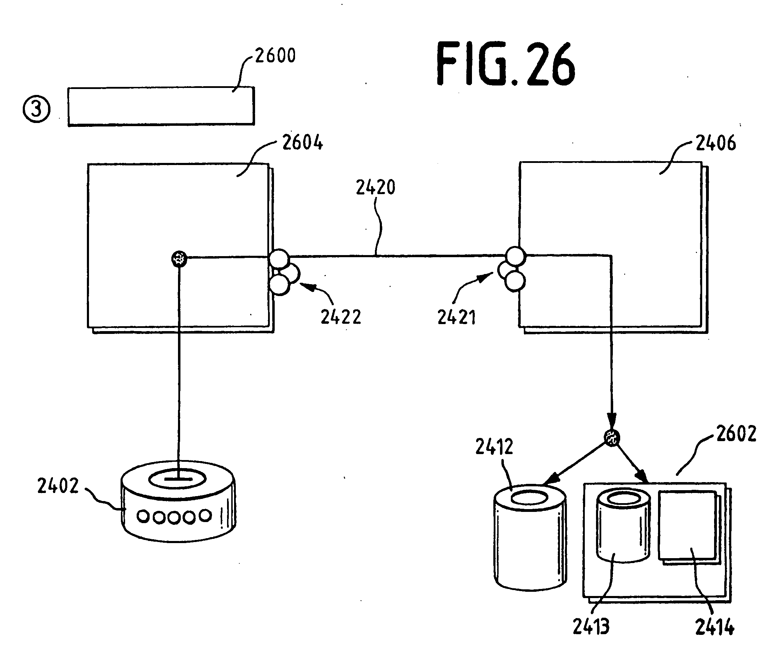

Anfänglich werden die Daten aus dem DB-Server 2402 wie im Schritt 1 2400 von FIG. 24 gezeigt durch die ERP-Software 2404 durch den Anwendungsserver 2406 zu dem liveCache-Server 2408 übertragen und dort in die optimierte Datenstruktur 2411 übertragen. Der in FIG. 25 gezeigte Schritt 2 2500 zeigt den zweiseitigen Fluß von Daten aus dem liveCache-Server 2502 zu der ERP Software 2504 und dann zu dem DB-Server 2506, der auftritt, wenn das liveCache-System per Anforderung des Anwendungsservers 2508 einen Plan erzeugt, der ausgeführt werden muß. Als letztes zeigt der in FIG. 26 gezeigte Schritt 3 2600, wie die Daten in dem liveCache-Server 2602 aktualisiert gehalten werden, während Transaktionen durch die ERP-Software 2604 verarbeitet werden. Wie oben erwähnt, werden die Daten in dem liveCache überschrieben, um so Speicheranforderungen zu minimieren.

### Bezugszeichen:

- 200: Festplatte
- 202: DB-Serverpuffer
- 204: Anwendungsserver mit
Anwendungsserverpuffer
Datenbankserver
- 302: ZENTRALPROZESSOR
- 304: HAUPTSPEICHER
- 306: EIN-/AUSGABE-STEUERUNG
- 308: TASTATUR
- 310: ZEIGEGERÄT
- 312: BILDSCHIRMANZEIGE
- 314: MASSENSPEICHER
- 402: BETRIEBSSYSTEM
- 404: SHELL
- 406: BENUTZERSCHNITTSTELLE
BENUTZER
- 408: RDBMS-CLIENT
ANWENDUNGSPROGRAMM (E)
- 502: CLIENT(S)
- 504: LIVECACHE-SERVER
- 506: NETZ
- 508: PC(S) ODER ENDGERÄT BZW. ENDGERÄTE
- 600, 606: Anwendungsserver
- 602: DB-Server
- 702: ATP-Anforderung
- 704: LIVECACHE-SERVER
- 712: Geplante Bestellungen
- 800: Befehlsanalysierer
- 804: SQL-Klasse
Rahmen zur Methodeneinbettung
- 806: OMS-Basis, Seitenketten
- 808: SQL-Basis
- 810: Protokollierung
- 812: SQL-Daten
- 814: Objektdaten
- 816: Registrierdatenbank
- 818: COM-Objekte (DLL)
- 820: Typenbibliothek
- 822: liveCache-Schnittstelle des R/3-Kerns (DBDS/native SQL)
- 900: Produktionsbestellung
Legende
Aktivität produziert Material
Aktivität verbraucht Material
Aktivität verbraucht und produziert Material
Aktivität verbraucht oder produziert kein Material
- 902: Erste-Aktivität
- 908: Erste-Eingabe
Schnittstellen-Knoten
- 910: Erste-Ausgabe
Schnittstellen-Knoten
- 1000: BOMs, Lenkungen, ...
Relationales Modell
Einstellbar
- 1002: Objektmodell
- 1202: Maschinen
Transportbestellung
Produktionsbestellung
- 1204: Verteilungszentralen
- 1206: Kundenanforderung
- 1302: OMS-Basis (Seitenketten)
- 1304: Datencache
- 1306: Privater OMS-Cache
- 1400: Klasse a
- 1402: Klasse a1
- 1404: Klasse a2
- 1500: Seite p
- 1502: Seitennummer
- 1504: Offset von Seitenende
- 1504: Objekt
- 1602: Datenseitennummer (mit Bezug auf die Datenseite des Objekts, mit Hash-Verweis auf eine Daten-Cache-Adresse)
- 1604: Datenseitenoffset (mit Offset des Objekts auf der Datenseite)
- 1606: Klassen-ID (die Klasse, zu dem das Objekt gehört)
- 1608: Version (ermöglicht die Wiederverwendbarkeit von Objektrahmen)
- 1702: FÜNF OBJEKTE
- 1912: Bestellung
- 2000: Anwendung 1 (Programmiersprache ABAP/4)
- 2002: Anwendung 2 (Programmiersprache: C)
- 2004: Anwendung 3 (Programmiersprache: C++)
- 2006: Sitzung 1
- 2008: Sitzung 2
Sitzung 3
- 2010: Sitzung 4
- 2014: COM-Objekte
- 2018: Daten
- 2020: liveCache-Managementsystem
- 2100: Anwendungsserver
- 2102: ABAP-Anwendungsprogramm
- 2104: Prozedur "Schedule_order" ausführen mit Optimierte Methodenkodierung
Schedule_order
Optimierte Datenstrukturen
- 2202: Objekt A
- 2204: Verriegeln von A
- 2206: Speichern von A
- 2208: Übergeben von A
- 2212: Objekt B, Transaktion ausführen
- 2214: Objekt C
- 2216: Verriegeln von B
- 2218: Verriegeln von C
- 2220: Speichern von B, C
- 2222: Speichern von C
- 2224: Transaktion ausführen
- 2228: altes Bild von B
altes Bild von C
- 2230: neues Bild von A
- 2300: Transaktionsmanagement
- 2304: altes Objektbild
- 2306: neues Objektbild
T1 - konsistentes Lesen
s verriegelt
Objektkörper
- 2400: APO-Population
- 2402: DB-Server
- 2404: Anwendungsserver
- 2406: Anwendungsserver
- 2410: Datenanordnung, optimiert
- 2504, 2508: Anwendungsserver
- 2506: DB-Server
- 2600: Operation ändern
- 2604: Anwendungsserver
- 2506: DB-Server

## Patentansprüche

1. Verfahren zum Speichern und Ausführen mindestens einer gespeicherten Prozedur an einem Datenobjekt in einem Datenbank-Managementsystem, wobei
a) mindestens eine objektorientierte Datenstruktur als eine persistente Klasse einer objektorientierten Programmiersprache in dem besagten Datenbank-Managementsystem definiert ist;
b) die besagte mindestens eine gespeicherte Prozedur als eine Methode eines COM-Objekts, das in einem COM-Objekt-Container gespeichert ist, definiert ist; und
c) das besagte Datenbank-Managementsystem in einem Adressenraum ausgeführt wird;
wobei das Verfahren folgende Schritte umfasst:
d) Abbilden relationaler Daten auf die besagte mindestens eine objektorientierte Datenstruktur;
e) Speichern der besagten relationalen Daten als das besagte Datenobjekt, das eine Instanz der besagten persistenten Klasse ist;
f) Speichern des besagten Datenobjekts in einem physikalischen Speicher;
g) Erzeugen einer Objektkennung, die für das besagte Datenobjekt eindeutig ist;
h) Speichern der besagten Objektkennung in einer SQL-Tabelle;
i) Aufrufen der besagten mindestens einen gespeicherten Prozedur durch eine SQL-Abfrage, die durch ein Anwendungsprogramm bereitgestellt wird;
j) Bereitstellen von mehreren Eingangsparametern für die besagte mindestens eine gespeicherte Prozedur;
k) dynamisches Binden der besagten mindestens einen gespeicherten Prozedur an einen Adressenraum, in dem das besagte Datenbank-Managementsystem abläuft;
l) Bereitstellen einer Kopie des besagten Datenobjekts in dem besagten Adressenraum; und
m) Ausführen der besagten mindestens einen gespeicherten Prozedur an dem besagten Datenobjekt.

2. Verfahren nach Anspruch 1, wobei sowohl das besagte Datenbank-Managementsystem als auch das besagte Datenobjekt in einem Hauptspeicher eines Computersystems gespeichert sind.

3. Verfahren nach Anspruch 2, wobei die besagte objektorientierte Programmiersprache C++ ist.

4. Verfahren nach Anspruch 3, weiterhin mit den folgenden Schritten:
a) Speichern der besagten relationalen Daten in einem Daten-Cache;
b) Bereitstellen eines Objektmanagementsystems zum Ausführen von C++-Funktionen;
c) Verwalten der Speicherung des besagten Datenobjekts durch eine Objektmanagementsystembasis; und
d) Bereitstellen eines privaten Objektmanagementcache zum Ausführen der besagten mindestens einen gespeicherten Prozedur.

5. Verfahren nach Anspruch 4, weiterhin mit den folgenden Schritten:
a) Zuweisen des besagten privaten Objektmanagementcache zu jedem einzelnen von mehreren Benutzern;
b) Bereitstellen einer separaten Instanz der besagten mindestens einen gespeicherten Prozedur in dem besagten privaten Objektmanagementcache für jeden einzelnen der besagten mehreren Benutzer; und
c) Bereitstellen einer separaten Instanz des besagten Datenobjekts für jeden einzelnen der besagten mehreren Benutzer in dem besagten privaten Objektmanagementcache; und
d) Ausführen der besagten separaten Instanz der besagten mindestens einen gespeicherten Prozedur an der besagten separaten Instanz des besagten Datenobjekts.

6. Verfahren nach Anspruch 4, wobei das besagte Verwalten der Speicherung des besagten Datenobjekts weiterhin die folgenden Schritte umfaßt:
a) Bereitstellen einer Seitenkette, die mehrere Seiten umfaßt, die der besagten persistenten Klasse entsprechen;
b) Speichern des besagten Datenobjekts in den besagten mehreren Seiten;
c) Erzeugen einer Tabelle mit einer Seitennummer und einem eindeutigen Wert für die besagte Seitennummer, der der besagten Objektkennung entspricht, die für das besagte Datenobjekt eindeutig ist;
d) Empfangen einer Anforderung, aus einer Benutzerschnittstelle, des besagten Datenobjekts;
e) Abbilden der besagten Objektkennung auf den besagten physikalischen Speicher, in dem das besagte Datenobjekt gespeichert ist; und
f) Abrufen des besagten Datenobjekts.

7. Verfahren nach Anspruch 6, weiterhin mit dem Schritt des Bereitstellens eines Datenbankindex zur Erleichterung des besagten Abrufens des besagten Datenobjekts.

8. Verfahren nach Anspruch 7, wobei der Datenbankindex eine B-Baumdatenstruktur ist.

9. Verfahren nach Anspruch 3, weiterhin mit den folgenden Schritten:
a) Verwalten des besagten Ausführens der besagten mindestens einen gespeicherten Prozedur;
b) Ausführen einer Commit-Transaktion nach dem Abschluß des Ausführens der besagten mindestens einen gespeicherten Prozedur;
c) Ausführen einer Rollback-Transaktion, wenn das besagte Ausführen der besagten mindestens einen gespeicherten Prozedur unabgeschlossen bleibt;
d) Aufzeichnen der besagten Commit-Transaktion und der besagten Rollback-Transaktion in einer Protokollierung in dem besagten Datenbank-Managementsystem;
e) Aufzeichnen eines Zustands des besagten Datenobjekts vor der besagten Ausführung der besagten mindestens einen gespeicherten Prozedur; und
f) Abrufen des besagten Zustands des besagten Datenobjekts vor der besagten Ausführung der besagten mindestens einen gespeicherten Prozedur nach dem besagten Aufzeichnen der besagten Rollback-Transaktion.

10. Verfahren nach Anspruch 1, wobei das Datenbank-Managementsystem ein R/3-System ist.

11. System zum Speichern und Ausführen mindestens einer gespeicherten Prozedur an einem Datenobjekt in einem Datenbank-Managementsystem, mit:
a) einem Mittel zum Definieren mindestens einer objektorientierten Datenstruktur als eine persistente Klasse einer objektorientierten Programmiersprache in dem besagten Datenbank-Managementsystem;
b) einem Mittel zum Definieren der besagten mindestens einen gespeicherten Prozedur als eine Methode eines COM-Objekts, das in einem COM-Objekt-Container gespeichert ist;
c) einem Mittel zum Ausführen des besagten Datenbank-Managementsystems in einem Adressenraum;
d) einem Mittel zum Abbilden relationaler Daten auf die besagte mindestens eine objektorientierte Datenstruktur;
e) einem Mittel zum Speichern der besagten relationalen Daten als das besagte Datenobjekt, das eine Instanz der besagten persistenten Klasse ist;
f) einem Mittel zum Speichern des besagten Datenobjekts in einem physikalischen Speicher;
g) einem Mittel zum Erzeugen einer Objektkennung, die für das besagte Datenobjekt eindeutig ist;
h) einem Mittel zum Speichern der besagten Objektkennung in einer SQL-Tabelle;
i) einem Mittel zum Aufrufen der besagten mindestens einen gespeicherten Prozedur durch eine SQL-Abfrage, die durch ein Anwendungsprogramm bereitgestellt wird;
j) einem Mittel zum Bereitstellen von mehreren Eingangsparametern für die besagte mindestens eine gespeicherte Prozedur;
k) einem Mittel zum dynamischen Binden der besagten mindestens einen gespeicherten Prozedur an einen Adressenraum, in dem das besagte Datenbank-Managementsystem abläuft;
l) einem Mittel zum Bereitstellen einer Kopie des besagten Datenobjekts in dem besagten Adressenraum; und
m) einem Mittel zum Ausführen der besagten mindestens einen gespeicherten Prozedur an dem besagten Datenobjekt.

12. System nach Anspruch 11, wobei sowohl das besagte Datenbank-Managementsystem als auch das besagte Datenobjekt in einem Hauptspeicher eines Computersystems gespeichert sind.

13. System nach Anspruch 12, wobei die besagte objektorientierte Programmiersprache C++ ist.

14. System nach Anspruch 13, weiterhin mit:
a) einem Mittel zum Ausführen von C++-Funktionen;
b) einem Mittel zum Verwalten der Speicherung des besagten Datenobjekts; und
c) einem Mittel zum Bereitstellen eines privaten Objektmanagementcache zum Ausführen der besagten mindestens einen gespeicherten Prozedur.

15. System nach Anspruch 14, weiterhin mit:
a) einem Mittel zum Zuweisen des besagten privaten Objektmanagementcache für jeden einzelnen von mehreren Benutzern;
b) einem Mittel zum Bereitstellen der besagten separaten Instanz der besagten mindestens einen gespeicherten Prozedur in dem besagten privaten Objektmanagementcache für jeden einzelnen der besagten mehreren Benutzer;
c) einem Mittel zum Bereitstellen einer separaten Instanz des besagten Datenobjekts in dem besagten privaten Objektmanagementcache für jeden einzelnen der besagten mehreren Benutzer; und
d) einem Mittel zum Ausführen der besagten separaten Instanz der besagten mindestens einen gespeicherten Prozedur an der besagten separaten Instanz des besagten Datenobjekts.

16. System nach Anspruch 14, wobei das besagte Mittel zum Verwalten der Speicherung des besagten Datenobjekts weiterhin folgendes umfaßt:
a) ein Mittel zum Bereitstellen einer Seitenkette, die mehrere Seiten umfaßt, die der besagten persistenten Klasse entsprechen;
b) ein Mittel zum Speichern des besagten Datenobjekts in den besagten mehreren Seiten;
c) ein Mittel zum Erzeugen einer Tabelle mit einer Seitennummer und einem eindeutigen Wert für die besagte Seitennummer, der der besagten Objektkennung des besagten Objekts entspricht;
d) ein Mittel zum Empfangen einer Anforderung, aus einer Benutzerschnittstelle, des besagten Datenobjekts;
e) ein Mittel zum Abbilden der besagten Objektkennung auf den besagten physikalischen Speicher, in dem das besagte Datenobjekt gespeichert ist; und
f) ein Mittel zum Abrufen des besagten Datenobjekts.

17. System nach Anspruch 16, weiterhin mit einem mittel zur Datenbankindizierung zur Erleichterung des besagten Abrufens des besagten Datenobjekts.

18. System nach Anspruch 17, wobei das besagte Mittel zur Datenbankindizierung eine B-Baumdatenstruktur ist.

19. System nach Anspruch 13, weiterhin mit:
a) einem Mittel zum Verwalten jedes besagten Ausführens der besagten mindestens einen gespeicherten Prozedur;
b) einem Mittel zum Ausführen einer Commit-Transaktion nach dem Abschluß des besagten Ausführens der besagten mindestens einen gespeicherten Prozedur;
c) einem Mittel zum Ausführen einer Rollback-Transaktion, wenn das besagte Ausführen der besagten mindestens einen gespeicherten Prozedur unabgeschlossen bleibt;
d) einem Mittel zum Aufzeichnen der besagten Commit-Transaktion und der besagten Rollback-Transaktion in einer Protokollierung in dem besagten Datenbank-Managementsystem;
e) einem Mittel zum Aufzeichnen eines Zustands des besagten Datenobjekts vor der besagten Ausführung der besagten mindestens einen gespeicherten Prozedur; und
f) einem Mittel zum Abrufen des besagten Zustands des besagten Datenobjekts vor der besagten Ausführung der besagten mindestens einen gespeicherten Prozedur nach dem besagten Aufzeichnen der besagten Rollback-Transaktion.

20. System nach Anspruch 11, weiterhin mit:
a) einer Datenbank zum Speichern von Mengen relationaler Daten;
b) einer ersten Schnittstelle zum Definieren mindestens einer objektorientierten Datenstruktur als eine persistente Klasse einer objektorientierten Programmiersprache für die besagten relationalen Daten;
c) einer zweiten Schnittstelle zum Abbilden der besagten relationalen Daten auf die besagte mindestens eine objektorientierte Datenstruktur;
d) einer dritten Schnittstelle zum Definieren der besagten mindestens einen gespeicherten Prozedur als eine Methode eines COM-Objekts;
e) einer COM-Bibliothek zum Speichern der besagten mindestens einen gespeicherten Prozedur;
f) einem Anwendungsprogramm, von dem aus eine Benutzerschnittstelle die besagten mindestens eine gespeicherte Prozedur durch eine SQL-Abfrage aus der besagten COM-Bibliothek aufruft; und
g) einem Hauptspeicher zum Speichern der besagten relationalen Daten als das besagte Datenobjekt, das eine Instanz der besagten persistenten Klasse ist, und zum Ausführen der besagten mindestens einen gespeicherten Prozedur an dem besagten Datenobjekt.

21. System nach Anspruch 20, wobei die besagte objektorientierte Programmiersprache C++ ist.

22. System nach Anspruch 20, weiterhin mit einer SQL-Tabelle zum Speichern einer Objektkennung, die für das besagte Datenobjekt eindeutig ist.

23. System nach Anspruch 22, weiterhin mit:
a) einem Objektmanagementsystem zum Ausführen von C++-Funktionen;
b) einer Objektmanagementsystembasis zum Verwalten der Speicherung des besagten Datenobjekts; und
c) einem privaten Objektmanagementcache zum besagten Ausführen der besagten mindestens einen gespeicherten Prozedur.

24. System nach Anspruch 23, wobei die besagte Objektmanagementsystembasis weiterhin folgendes umfaßt:
a) eine Seitenkette, die mehrere Seiten umfaßt, die der besagten persistenten Klasse für die besagte Speicherung des besagten Datenobjekts entsprechen;
b) eine Tabelle zum Speichern einer Seitennummer und eines der besagten Seitennummer entsprechenden eindeutigen Werts, der der besagten Objektkennung entspricht, die für das besagte Datenobjekt eindeutig ist;
c) eine vierte Schnittstelle zum Eingeben einer Anforderung, aus der besagten Benutzerschnittstelle, des besagten Datenobjekts; und
d) eine fünfte Schnittstelle zum Abbilden der besagten Anforderung auf den besagten physikalischen Speicher, in dem das besagte Datenobjekt gespeichert ist, und zum Abrufen des besagten Datenobjekts.

25. System nach Anspruch 24, weiterhin mit einem Datenbankindex zur Erleichterung des besagten Abrufens des besagten Datenobjekts.

26. System nach Anspruch 25, wobei der besagte Datenbankindex eine B-Baumdatenstruktur ist.

27. System nach Anspruch 20, weiterhin mit einem System zum Verwalten des besagten Ausführens der besagten mindestens einen gespeicherten Prozedur, mit:
a) einer Protokollierungsdatei zum Speichern einer Commit-Transaktion nach dem Abschluß des besagten Ausführens der besagten mindestens einen gespeicherten Prozedur;
b) einer Protokollierungsdatei zum Speichern einer Rollback-Transaktion, wenn das besagte Ausführen der besagten mindestens einen gespeicherten Prozedur unabgeschlossen bleibt;
c) einer Datenbankdatei zum Aufzeichnen eines Zustands des besagten Datenobjekts vor der besagten Ausführung der besagten mindestens einen gespeicherten Prozedur; und
d) ein Teilsystem zum Abrufen des besagten Zustands des besagten Datenobjekts vor der besagten Ausführung der besagten mindestens einen gespeicherten Prozedur nach dem besagten Speichern der besagten Rollback-Transaktion.

28. Computerlesbares Medium, auf dem mehrere Anweisungen gespeichert sind, wobei die besagten mehreren Anweisungen Anweisungen enthalten, die bei der Ausführung durch einen Prozessor bewirken, daß der Prozessor die folgenden Schritte eines Verfahrens zum Speichern und Ausführen mindestens einer gespeicherten Prozedur an einem Datenobjekt in einem Datenbank-Managementsystem ausführt, wobei
a) mindestens eine objektorientierte Datenstruktur als eine persistente Klasse einer objektorientierten Programmiersprache in dem besagten Datenbank-Managementsystem definiert ist;
b) die besagte mindestens eine gespeicherte Prozedur als eine Methode eines COM-Objekts, das in einem COM-Objekt-Container gespeichert ist, definiert ist; und
c) das besagte Datenbank-Managementsystem in einem Adressenraum ausgeführt wird; und wobei die Anweisungen Anweisungen zum Ausführen folgender Schritte enthalten:
d) Abbilden relationaler Daten auf die besagte mindestens eine objektorientierte Datenstruktur;
e) Speichern der besagten relationalen Daten als das besagte Datenobjekt, das eine Instanz der besagten persistenten Klasse ist;
f) Speichern des besagten Datenobjekts in einem physikalischen Speicher;
g) Erzeugen einer Objektkennung, die für das besagte Datenobjekt eindeutig ist;
g) Speichern der besagten Objektkennung in einer SQL-Tabelle;
i) Aufrufen der besagten mindestens einen gespeicherten Prozedur durch eine SQL-Abfrage, die durch ein Anwendungsprogramm bereitgestellt wird;
j) Bereitstellen von mehreren Eingangsparametern für die besagte mindestens eine gespeicherte Prozedur;
k) dynamisches Binden der besagten mindestens einen gespeicherten Prozedur an einen Adressenraum, in dem das besagte Datenbank-Managementsystem abläuft;
l) Bereitstellen einer Kopie des besagten Datenobjekts in dem besagten Adressenraum; und
m) Ausführen der besagten mindestens einen gespeicherten Prozedur an dem besagten Datenobjekt.

29. Computerlesbares Medium nach Anspruch 28, wobei die besagten mehreren Anweisungen weitere Anweisungen enthalten, die bei der Ausführung durch einen Prozessor bewirken, daß der Prozessor die zusätzlichen Schritte des Speicherns des besagten Datenbank-Managementsystems und des besagten Datenobjekts in einem Hauptspeicher eines Computersystems durchführt.

30. Computerlesbares Medium nach Anspruch 29, wobei die besagten mehreren Anweisungen weitere Anweisungen enthalten, die bei der Ausführung durch einen Prozessor bewirken, daß der Prozessor den zusätzlichen Schritt des Bereitstellens von C++ als die besagte objektorientierte Programmiersprache durchführt.

31. Computerlesbares Medium nach Anspruch 30, wobei die besagten mehreren Anweisungen weitere Anweisungen enthalten, die bei der Ausführung durch einen Prozessor bewirken, daß der Prozessor die folgenden zusätzlichen Schritte durchführt:
a) Speichern der besagten relationalen Daten in einem Daten-Cache;
b) Bereitstellen eines objektmanagementsystems zum Ausführen von C++-Funktionen;
c) Verwalten der Speicherung des besagten Datenobjekts durch eine Objektmanagementsystembasis; und
d) Bereitstellen eines privaten Objektmanagementcache zum Ausführen der besagten mindestens einen gespeicherten Prozedur.

32. Computerlesbares Medium nach Anspruch 31, wobei die besagten mehreren Anweisungen weitere Anweisungen enthalten, die bei der Ausführung durch einen Prozessor bewirken, daß der Prozessor die folgenden zusätzlichen Schritte durchführt:
a) Zuweisen des besagten privaten Objektmanagementcache zu jedem einzelnen von mehreren Benutzern;
b) Bereitstellen einer separaten Instanz der besagten mindestens einen gespeicherten Prozedur in dem besagten privaten Objektmanagementcache für jeden einzelnen der besagten mehreren Benutzer;
c) Bereitstellen einer separaten Instanz des besagten Datenobjekts für jeden einzelnen der besagten mehreren Benutzer in dem besagten privaten Objektmanagementcache; und
d) Ausführen der besagten separaten Instanz der besagten mindestens einen gespeicherten Prozedur an der besagten separaten Instanz des besagten Datenobjekts.

33. Computerlesbares Medium nach Anspruch 31, wobei die besagten mehreren Anweisungen weitere Anweisungen enthalten, die bei der Ausführung durch einen Prozessor bewirken, daß der Prozessor die folgenden zusätzlichen Schritte durchführt:
a) Bereitstellen einer Seitenkette, die mehrere Seiten umfaßt, die der besagten persistenten Klasse entsprechen;
b) Speichern des besagten Datenobjekts in den besagten mehreren Seiten;
c) Erzeugen einer Tabelle mit einer Seitennummer und einem eindeutigen Wert für die besagte Seitennummer, der der besagten Objektkennung entspricht, die für das besagte Datenobjekt eindeutig ist;
d) Empfangen einer Anforderung, aus einer Benutzerschnittstelle, des besagten Datenobjekts;
e) Abbilden der besagten Objektkennung auf den besagten physikalischen Speicher, in dem das besagte Datenobjekt gespeichert ist; und
f) Abrufen des besagten Datenobjekts.

34. Computerlesbares Medium nach Anspruch 31, wobei die besagten mehreren Anweisungen weitere Anweisungen enthalten, die bei der Ausführung durch einen Prozessor bewirken, daß der Prozessor den zusätzlichen Schritt des Bereitstellens eines Datenbankindex zur Erleichterung des besagten Abrufens des besagten Datenobjekts durchführt.

35. Computerlesbares Medium nach Anspruch 34, wobei die besagten mehreren Anweisungen weitere Anweisungen enthalten, die bei der Ausführung durch einen Prozessor bewirken, daß der Prozessor den zusätzlichen Schritt des Bereitstellens des besagten Datenbankindex in Form einer B-Baumdatenstruktur durchführt.

36. Computerlesbares Medium nach Anspruch 30, wobei die besagten mehreren Anweisungen weitere Anweisungen enthalten, die bei der Ausführung durch einen Prozessor bewirken, daß der Prozessor die folgenden zusätzlichen Schritte durchführt:
a) Verwalten des besagten Ausführens der besagten mindestens einen gespeicherten Prozedur;
b) Ausführen einer Commit-Transaktion nach dem Abschluß des besagten Ausführens der besagten mindestens einen gespeicherten Prozedur;
c) Ausführen einer Rollback-Transaktion, wenn das besagte Ausführen der besagten mindestens einen gespeicherten Prozedur unabgeschlossen bleibt;
d) Aufzeichnen der besagten Commit-Transaktion und der besagten Rollback-Transaktion in einer Protokollierung in dem besagten Datenbank-Managementsystem;
e) Aufzeichnen eines Zustands des besagten Datenobjekts vor der besagten Ausführung der besagten mindestens einen gespeicherten Prozedur; und
f) Abrufen des besagten Zustands des besagten Datenobjekts vor der besagten Ausführung der besagten mindestens einen gespeicherten Prozedur nach dem besagten Aufzeichnen der besagten Rollback-Transaktion.

## Claims

1. A method for storing and executing at least one stored procedure on a data object in a database management system wherein
a) at least one object-oriented data structure is defined in said database management system as a persistent class of an object-oriented programming language;
b) said at least one stored procedure is defined as a method of a COM object which is stored in a COM object container, and
c) said database management system is executed in an address space;
wherein the method comprises the following steps:
d) mapping relational data into said at least one object-oriented data structure;
e) storing said relational data as said data object which is an instance of said persistent class;
f) storing said data object in a physical memory;
g) generating an object identifier which is unique to said data object;
h) storing said object identifier in an SQL table;
i) calling said at least one stored procedure through an SQL query provided by an application program;
j) providing said at least one stored procedure with a plurality of input parameters;
k) dynamically linking said at least one stored procedure to an address space in which said database management system is executing;
l) providing a copy of said data object in said address space; and
m) executing said at least one stored procedure upon said data object.

2. The method of claim 1 wherein said database management system as well as said data object are stored in a main memory of a computer system.

3. The method of claim 2 wherein said object-oriented programming language is C++.

4. The method of claim 3 further comprising the following steps:
a) storing said relational data in a data cache;
b) providing an object management system for executing C++ functions;
c) managing the storage of said data object through an object management system basis; and
d) providing a private object management cache for executing said at least one stored procedure.

5. The method of claim 4 further comprising the following steps:
a) assigning said private object management cache to each one of a plurality of users;
b) providing a separate instance of said at least one stored procedure in said private object management cache for each one of said plurality of users; and
c) providing a separate instance of said data object for each one of said plurality of users in said private object management cache; and
d) executing said separate instance of said at least one stored procedure on said separate instance of said data object.

6. The method of claim 4 wherein said managing of the storage of said data object further comprises the following steps:
a) providing a page chain comprising a plurality of pages corresponding to said persistent class;
b) storing said data object in said plurality of pages;
c) creating a table with a page number and a unique value for said page number that corresponds to said object identifier which is unique to said data object;
d) receiving a request from a user interface of said data object;
e) mapping said object identifier to said physical memory where said data object is stored; and
f) retrieving said data object.

7. The method of claim 6 further comprising the step of providing a database index to facilitate said retrieving of said data object.

8. The method of claim 7 wherein said database index is a B-tree data structure.

9. The method of claim 3 further comprising the following steps:
a) managing said executing of said at least one stored procedure;
b) executing a commit transaction after completion of executing of said at least one stored procedure;
c) executing a rollback transaction when said executing of said at least one stored procedure remains uncompleted;
d) recording said commit transaction and said rollback transaction in a log in said database management system;
e) recording a status of said data object before said executing of said at least one stored procedure; and
f) retrieving said status of said data object before said executing of said at least one stored procedure after said recording of said rollback transaction.

10. The method of claim 1 wherein the database management system is an R/3 system.

11. A system for storing and executing at least one stored procedure on a data object in a database management system comprising:
a) means for defining at least one object-oriented data structure as a persistent class of an object-oriented programming language in said database management system;
b) means for defining said at least one stored procedure as a method of a COM object which is stored in a COM object container;
c) means for executing said database management system in an address space;
d) means for mapping relational data into said at least one object-oriented data structure;
e) means for storing said relational data as said data object which is an instance of said persistent class;
f) means for storing said data object in a physical memory;
g) means for generating an object identifier which is unique to said data object;
h) means for storing said object identifier in an SQL table;
i) means for calling said at least one stored procedure through an SQL query provided by an application program;
j) means for providing said at least one stored procedure with a plurality of input parameters;
k) means for dynamically linking said at least one stored procedure to an address space in which said database management system is executing;
l) means for providing a copy of said data object in said address space; and
m) means for executing said at least one stored procedure upon said data object.

12. The system of claim 11 wherein said database management system as well as said data object are stored in a main memory of a computer system.

13. The system of claim 12 wherein said object-oriented programming language is C++.

14. The system of claim 13 further comprising:
a) means for executing C++ functions;
b) means for managing the storage of said data object; and
c) means for providing a private object management cache for executing said at least one stored procedure.

15. The system of claim 14 further comprising:
a) means for assigning said private object management cache for each one of a plurality of users;
b) means for providing said separate instance of said at least one stored procedure in said private object management cache for each one of said plurality of users;
c) means for providing a separate instance of said data object for each one of said plurality of users in said private object management cache; and
d) means for executing said separate instance of said at least one stored procedure on said separate instance of said data object.

16. The system of claim 14 wherein said means for managing the storage of said data object further comprises:
a) means for providing a page chain comprising a plurality of pages corresponding to said persistent class;
b) means for storing said data object in said plurality of pages;
c) means for creating a table with a page number and a unique value for said page number that corresponds to said object identifier of said object;
d) means for receiving a request from a user interface of said data object;
e) means for mapping said object identifier to said physical memory where said data object is stored; and
f) means for retrieving said data object.

17. The system of claim 16 further comprising means for database indexing to facilitate said retrieving of said data object.

18. The system of claim 17 wherein said means for database indexing is a B-tree data structure.

19. The system of claim 13 further comprising:
a) means for managing each said executing of said at least one stored procedure;
b) means for executing a commit transaction after completion of said executing of said at least one stored procedure;
c) means for executing a rollback transaction when said executing of said at least one stored procedure remains uncompleted;
d) means for recording said commit transaction and said rollback transaction in a log in said database management system;
e) means for recording a status of said data object before said executing of said at least one stored procedure; and
f) means for retrieving said status of said data object before said executing of said at least one stored procedure after said recording of said rollback transaction.

20. The system of claim 11 further comprising:
a) a database for storing amounts of relational data;
b) a first interface for defining at least one object-oriented data structure as a persistent class of an object-oriented programming language for said relational data;
c) a second interface for mapping said relational data into said at least one object-oriented data structure;
d) a third interface for defining said at least one stored procedure as a method of a COM object;
e) a COM library for storing said at least one stored procedure;
f) an application program from which a user interface calls said at least one stored procedure through an SQL query from said COM library; and
g) a main memory for storing said relational data as said data object which is an instance of said persistent class and for executing said at least one stored procedure on said data object.

21. The system of claim 20 wherein said object-oriented programming language is C++.

22. The system of claim 20 further comprising an SQL table for storing an object identifier which is unique to said data object.

23. The system of claim 22 further comprising:
a) an object management system for executing C++ functions;
b) an object management system basis for managing storage of said data object; and
c) a private object management cache for said executing of said at least one stored procedure.

24. The system of claim 23 wherein said object management system basis further comprises the following:
a) a page chain comprising a plurality of pages corresponding to said persistent class for said storage of said data object;
b) a table for storing a page number and a unique value corresponding to said page number and that corresponds to said object identifier which is unique to said data object;
c) a fourth interface for inputting a request from said user interface for said data object; and
d) a fifth interface for mapping said request to said physical memory where said data object is stored and for retrieving said data object.

25. The system of claim 24 further comprising a database index for facilitating said retrieving of said data object.

26. The system of claim 25 wherein said database index is a B-tree data structure.

27. The system of claim 20 further comprising a system for managing said executing of said at least one stored procedure comprising:
a) a log file for storing a commit transaction after completion of said executing of said at least one stored procedure;
b) a log file for storing a rollback transaction when said executing of said at least one stored procedure remains uncompleted;
c) a database file for recording a status of said data object before said executing of said at least one stored procedure; and
d) a subsystem for retrieving said status of said data object before said executing of said at least one stored procedure after said storing of said rollback transaction.

28. A computer-readable medium upon which a plurality of instructions is stored, wherein said plurality of instructions include instructions which cause, when executed by a processor, that the processor performs the following steps of a method for storing and executing of at least one stored procedure on a data object in a database management system, wherein:
a) at least one object-oriented data structure is defined in said database management system as a persistent class of an object-oriented programming language;
b) said at least one stored procedure is defined as a method of a COM object which is stored in a COM object container, and
c) said database management system is executed in an address space;
and wherein the instructions include instructions for executing the following steps:
d) mapping relational data into said at least one object-oriented data structure;
e) storing said relational data as said data object which is an instance of said persistent class;
f) storing said data object in a physical memory;
g) generating an object identifier which is unique to said data object;
h) storing said object identifier in an SQL table;
i) calling said at least one stored procedure through an SQL query provided by an application program;
j) providing said at least one stored procedure with a plurality of input parameters;
k) dynamically linking said at least one stored procedure to an address space in which said database management system is executing;
l) providing a copy of said data object in said address space; and
m) executing said at least one stored procedure upon said data object.

29. The computer-readable medium of claim 28 wherein said plurality of instructions include further instructions which cause, when executed by a processor, that the processor performs the additional steps of storing said database management system and said data object in a main memory of a computer system.

30. The computer-readable medium of claim 29 wherein said plurality of instructions include further instructions which cause, when executed by a processor, that the processor performs the additional steps of providing C++ as said object-oriented programming language.

31. The computer-readable medium of claim 30 wherein said plurality of instructions include further instructions which cause, when executed by a processor, that the processor performs the following additional steps of:
a) storing said relational data in a data cache;
b) providing an object management system for executing C++ functions;
c) managing the storage of said data object through an object management system basis; and
d) providing a private object management cache for executing said at least one stored procedure.

32. The computer-readable medium of claim 31 wherein said plurality of instructions includes further instructions which cause, when executed by a processor, that the processor performs the additional steps of:
a) assigning said private object management cache to each one of a plurality of users;
b) providing a separate instance of said at least one stored procedure in said private object management cache for each one of said plurality of users;
c) providing a separate instance of said data object for each one of said plurality of users in said private object management cache; and
d) executing said separate instance of said at least one stored procedure on said separate instance of said data object.

33. The computer-readable medium of claim 31 wherein said plurality of instructions includes further instructions which cause, when executed by a processor, that the processor performs the additional steps of:
a) providing a page chain comprising a plurality of pages corresponding to said persistent class;
b) storing said data object in said plurality of pages;
c) creating a table with a page number and a unique value for said page number which value corresponds to said object identifier unique to said data object;
d) receiving a request from a user interface for said data object;
e) mapping said object identifier to said physical memory where said data object is stored; and
f) retrieving said data object.

34. The computer-readable medium of claim 31 wherein said plurality of instructions includes further instructions which cause, when executed by a processor, that the processor performs the additional step of providing a database index to facilitate said retrieving of said data object.

35. The computer-readable medium of claim 34 wherein said plurality of instructions includes further instructions which cause, when executed by a processor, that the processor performs the additional step of providing said database index in the form of a B-tree data structure.

36. The computer-readable medium of claim 30 wherein said plurality of instructions includes further instructions which cause, when executed by a processor, that the processor performs the additional steps of:
a) managing said executing of said at least one stored procedure;
b) executing a commit transaction after completion of said executing of said at least one stored procedure;
c) executing a rollback transaction when said executing of said at least one stored procedure remains uncompleted;
d) recording said commit transaction and said rollback transaction in a log in said database management system;
e) recording a status of said data object before said executing of said at least one stored procedure; and
f) retrieving said status of said data object before said executing of said at least one stored procedure after said recording of said rollback transaction.

## Revendications

1. Procédé de stockage et d'exécution d'au moins une procédure stockée dans un objet de données dans un système de gestion de base de données, dans lequel
a) au moins une structure de données orientée objet est définie en tant qu'une classe persistante d'un langage de programmation orienté objet dans ledit système de gestion de base de données ;
b) ladite au moins une procédure stockée est définie en tant qu'une méthode d'un objet COM, qui est stocké dans un conteneur d'objet COM ; et
c) ledit système de gestion de base de données est réalisé dans un espace d'adresses,
le procédé comprenant les étapes suivantes :
d) reproduction de données relationnelles sur ladite au moins une structure de données orientée objet ;
e) stockage desdites données relationnelles sous forme dudit objet de données, qui est une instance de ladite classe persistante ;
f) stockage dudit objet de données dans une mémoire physique ;
g) génération d'un indicateur d'objet, qui est univoque pour ledit objet de données ;
h) stockage dudit indicateur d'objet dans une table SQL ;
i) appel de ladite au moins une procédure stockée par une requête SQL, préparée par un programme d'application ;
j) préparation de plusieurs paramètres d'entrée pour ladite au moins une procédure stockée ;
k) liaison dynamique de ladite au moins une procédure stockée dans un espace d'adresses, dans lequel s'exécute ledit système de gestion de base de données ;
l) préparation d'une copie dudit objet de données dans ledit espace d'adresses ; et
m) exécution de ladite au moins une procédure stockée sur ledit objet de données.

2. Procédé suivant la revendication 1, dans lequel aussi bien ledit système de gestion de base de données que ledit objet de données sont stockés dans une mémoire centrale d'un système informatique.

3. Procédé suivant la revendication 2, dans lequel ledit langage de programmation orienté objet est C++.

4. Procédé suivant la revendication 3, comprenant en outre les étapes suivantes :
a) stockage desdites données relationnelles dans un cache de données ;
b) préparation d'un système de gestion d'objets pour l'exécution de fonctions C++ ;
c) gestion du stockage dudit objet de données par une base de système de gestion d'objets ; et
d) préparation d'un cache de gestion d'objets privé pour l'exécution de ladite au moins une procédure stockée.

5. Procédé suivant la revendication 4, comprenant en outre les étapes suivantes :
a) allocation dudit cache de gestion d'objets privé à chacun des multiples utilisateurs individuels ;
b) préparation d'une instance séparée de ladite au moins une procédure stockée dans ledit cache de gestion d'objets privé pour chacun desdits multiples utilisateurs individuels ; et
c) préparation d'une instance séparée dudit objet de données pour chacun desdits multiples utilisateurs individuels dans ledit cache de gestion d'objets privé ; et
d) exécution de ladite instance séparée de ladite au moins une procédure stockée sur ladite instance séparée dudit objet de données.

6. Procédé suivant la revendication 4, dans lequel ladite gestion du stockage dudit objet de données comprend en outre les étapes suivantes :
a) préparation d'une chaîne de pages comprenant plusieurs pages, qui correspondent à ladite classe persistante ;
b) stockage dudit objet de données dans lesdites plusieurs pages ;
c) génération d'une table avec un numéro de page et une valeur univoque pour ledit numéro de page, qui correspond audit indicateur d'objet univoque pour ledit objet de données ;
d) réception d'une demande, d'une interface utilisateur, dudit objet de données ;
e) reproduction dudit indicateur d'objet sur ladite mémoire physique, dans laquelle est stocké ledit objet de données ; et
f) appel dudit objet de données.

7. Procédé suivant la revendication 6, comprenant en outre l'étape de la préparation d'un index de base de données pour faciliter ledit appel dudit objet de données.

8. Procédé suivant la revendication 7, dans lequel l'index de base de données est une structure de données en arbre B.

9. Procédé suivant la revendication 3, comprenant en outre les étapes suivantes :
a) gestion de ladite exécution de ladite au moins une procédure stockée ;
b) exécution d'une transaction Commit à la fin de l'exécution de ladite au moins une procédure stockée ;
c) exécution d'une transaction Rollback, lorsque ladite exécution de ladite au moins une procédure stockée reste inachevée ;
d) enregistrement de ladite transaction Commit et de ladite transaction Rollback dans un enregistrement dans ledit système de gestion de base de données ;
e) enregistrement d'un état dudit objet de données avant ladite exécution de ladite au moins une procédure stockée ; et
f) appel dudit état dudit objet de données avant ladite exécution de ladite au moins une procédure stockée après ledit enregistrement de ladite transaction Rollback.

10. Procédé suivant la revendication 1, dans lequel le système de gestion de base de données est un système R/3.

11. Système de stockage et d'exécution d'au moins une procédure stockée sur un objet de données dans un système de gestion de base de données, comprenant :
a) un moyen pour la définition d'au moins une structure de données orientée objet en tant qu'une classe persistante d'un langage de programmation orienté objet dans ledit système de gestion de base de données ;
b) un moyen pour la définition de ladite au moins une procédure stockée en tant qu'une méthode d'un objet COM, stocké dans un conteneur d'objet COM ;
c) un moyen pour l'exécution dudit système de gestion de base de données dans un espace d'adresses ;
d) un moyen pour la reproduction de données relationnelles sur ladite au moins une structure de données orientée objet ;
e) un moyen pour le stockage desdites données relationnelles sous forme dudit objet de données, qui est une instance de ladite classe persistante ;
f) un moyen pour le stockage dudit objet de données dans une mémoire physique ;
g) un moyen pour générer un indicateur d'objet, qui est univoque pour ledit objet de données ;
h) un moyen pour le stockage dudit indicateur d'objet dans une table SQL ;
i) un moyen pour l'appel de ladite au moins une procédure stockée par une requête SQL, qui est préparée par un programme d'application ;
j) un moyen pour la préparation de plusieurs paramètres d'entrée pour ladite au moins une procédure stockée ;
k) un moyen pour la liaison dynamique de ladite au moins une procédure stockée dans un espace d'adresses, dans lequel s'exécute ledit système de gestion de base de données ;
l) un moyen pour la préparation d'une copie dudit objet de données dans ledit espace d'adresses ; et
m) un moyen pour l'exécution de ladite au moins une procédure stockée sur ledit objet de données.

12. Système suivant la revendication 11, dans lequel aussi bien ledit système de gestion de base de données que ledit objet de données sont stockés dans une mémoire centrale d'un système informatique.

13. Système suivant la revendication 12, dans lequel ledit langage de programmation orienté objet est C++.

14. Système suivant la revendication 13, comprenant en outre :
a) un moyen pour l'exécution de fonctions C++ ;
b) un moyen pour la gestion du stockage dudit objet de données ; et
c) un moyen pour la préparation d'un cache de gestion d'objets privé en vue de l'exécution de ladite au moins une procédure stockée.

15. Système suivant la revendication 14, comprenant en outre :
a) un moyen d'allocation dudit cache de gestion d'objets privé pour chacun des multiples utilisateurs individuels ;
b) un moyen de préparation de ladite instance séparée de ladite au moins une procédure stockée dans ledit cache de gestion d'objets privé pour chacun desdits multiples utilisateurs individuels ;
c) un moyen de préparation d'une instance séparée dudit objet de données dans ledit cache de gestion d'objets privé pour chacun desdits multiples utilisateurs individuels; et
d) un moyen d'exécution de ladite instance séparée de ladite au moins une procédure stockée sur ladite instance séparée dudit objet de données.

16. Système suivant la revendication 14, dans lequel ledit moyen de gestion du stockage dudit objet de données comprend en outre les moyens suivants :
a) un moyen de préparation d'une chaîne de pages comportant plusieurs pages, qui correspondent à ladite classe persistante ;
b) un moyen de stockage dudit objet de données dans lesdites plusieurs pages ;
c) un moyen de génération d'une table avec un numéro de page et une valeur univoque pour ledit numéro de page, qui correspond audit indicateur d'objet dudit objet ;
d) un moyen de réception d'une demande, d'une interface utilisateur, dudit objet de données ;
e) un moyen de reproduction dudit indicateur d'objet sur ladite mémoire physique, dans laquelle est stocké ledit objet de données ; et
f) un moyen d'appel dudit objet de données.

17. Système suivant la revendication 16, comprenant en outre un moyen d'indexation de la base de données pour faciliter ledit appel dudit objet de données.

18. Système suivant la revendication 17, dans lequel ledit moyen d'indexation de la base de données est une structure de données en arbre B.

19. Système suivant la revendication 13, comprenant en outre :
a) un moyen de gestion de chaque dite exécution de ladite au moins une procédure stockée ;
b) un moyen d'exécution d'une transaction Commit à la fin de ladite exécution de ladite au moins une procédure stockée ;
c) un moyen d'exécution d'une transaction Rollback, lorsque ladite exécution de ladite au moins une procédure stockée reste inachevée ;
d) un moyen d'enregistrement de ladite transaction Commit et de ladite transaction Rollback dans un enregistrement dans ledit système de gestion de base de données ;
e) un moyen d'enregistrement d'un état dudit objet de données avant ladite exécution de ladite au moins une procédure stockée ; et
f) un moyen d'appel dudit état dudit objet de données avant ladite exécution de ladite au moins une procédure stockée après ledit enregistrement de ladite transaction Rollback.

20. Système suivant la revendication 11, comprenant en outre :
a) une base de données pour le stockage de quantités de données relationnelles ;
b) une première interface pour la définition d'au moins une structure de données orientée objet en tant qu'une classe persistante d'un langage de programmation orienté objet pour lesdites données relationnelles ;
c) une deuxième interface pour la reproduction desdites données relationnelles sur ladite au moins une structure de données orientée objet ;
d) une troisième interface pour la définition de ladite au moins une procédure stockée en tant qu'une méthode d'un objet COM ;
e) une bibliothèque COM pour le stockage de ladite au moins une procédure stockée ;
f) un programme d'application, à partir duquel une interface utilisateur appelle ladite au moins une procédure stockée par une requête SQL de ladite bibliothèque COM ; et
g) une mémoire centrale pour le stockage desdites données relationnelles sous forme dudit objet de données, qui est une instance de ladite classe persistante, et pour l'exécution de ladite au moins une procédure stockée sur ledit objet de données.

21. Système suivant la revendication 20, dans lequel ledit langage de programmation orienté objet est C++.

22. Système suivant la revendication 20, comprenant en outre une table SQL pour le stockage d'un indicateur d'objet univoque pour ledit objet de données.

23. Système suivant la revendication 22, comprenant en outre :
a) un système de gestion d'objets pour l'exécution de fonctions C++ ;
b) une base de système de gestion d'objets pour gérer le stockage dudit objet de données ; et
c) un cache de gestion d'objets privé pour ladite exécution de ladite au moins une procédure stockée.

24. Système suivant la revendication 23, dans lequel ladite base de système de gestion d'objets comprend en outre :
a) une chaîne de pages comprenant plusieurs pages, qui correspondent à ladite classe persistante pour ledit stockage dudit objet de données;
b) une table pour le stockage d'un numéro de page et d'une valeur univoque correspondante au dit numéro de page, laquelle valeur correspond au dit indicateur d'objet univoque pour ledit objet de données ;
c) une quatrième interface pour l'introduction d'une demande, depuis ladite interface utilisateur, dudit objet de données ; et
d) une cinquième interface pour la reproduction de ladite demande sur ladite mémoire physique, dans laquelle est stocké ledit objet de données, et pour l'appel dudit objet de données.

25. Système suivant la revendication 24, comprenant en outre un index de base de données pour faciliter ledit appel dudit objet de données.

26. Système suivant la revendication 25, dans lequel ledit index de base de données est une structure de données en arbre B.

27. Système suivant la revendication 20, comprenant en outre un système de gestion de ladite exécution de ladite au moins une procédure stockée, avec :
a) un fichier d'enregistrement pour le stockage d'une transaction Commit à la fin de ladite exécution de ladite au moins une procédure stockée ;
b) un fichier d'enregistrement pour le stockage d'une transaction Rollback, lorsque ladite exécution de ladite au moins une procédure stockée reste inachevée ;
c) un fichier de base de données pour l'enregistrement d'un état dudit objet de données avant ladite exécution de ladite au moins une procédure stockée ; et
d) un sous-système pour l'appel dudit état dudit objet de données avant ladite exécution de ladite au moins une procédure stockée après ledit stockage de ladite transaction Rollback.

28. Support lisible par ordinateur sur lequel sont stockées plusieurs instructions, lesdites plusieurs instructions comportant des instructions qui font, lors de l'exécution par un processeur, que le processeur exécute les étapes suivantes d'un procédé pour le stockage et l'exécution d'au moins une procédure stockée sur un objet de données dans un système de gestion de base de données, support dans lequel
a) au moins une structure de données orientée objet est définie en tant qu'une classe persistante d'un langage de programmation orienté objet dans ledit système de gestion de base de données ;
b) ladite au moins une procédure stockée est définie en tant qu'une méthode d'un objet COM, qui est stocké dans un conteneur d'objets COM ; et
c) ledit système de gestion de base de données est exécuté dans un espace d'adresses ;
et dans lequel les instructions comportent des instructions pour l'exécution des étapes suivantes :
d) reproduction de données relationnelles sur ladite au moins une structure de données orientée objet ;
e) stockage desdites données relationnelles sous forme dudit objet de données, qui est une instance de ladite classe persistante ;
f) stockage dudit objet de données dans une mémoire physique ;
g) génération d'un indicateur d'objet, qui est univoque pour ledit objet de données ;
h) stockage dudit indicateur d'objet dans une table SQL ;
i) appel de ladite au moins une procédure stockée par une requête SQL, qui est préparée par un programme d'application ;
j) préparation de plusieurs paramètres d'entrée pour ladite au moins une procédure stockée ;
k) liaison dynamique de ladite au moins une procédure stockée dans un espace d'adresses, dans laquelle se déroule ledit système de gestion de base de données ;
l) préparation d'une copie dudit objet de données dans ledit espace d'adresses ; et
m) exécution de ladite au moins une procédure stockée sur ledit objet de données.

29. Support lisible par ordinateur suivant la revendication 28, lesdites plusieurs instructions comportant d'autres instructions qui font, lors de l'exécution par un processeur, que le processeur exécute les étapes supplémentaires du stockage dudit système de gestion de base de données et dudit objet de données dans une mémoire centrale d'un système informatique.

30. Support lisible par ordinateur suivant la revendication 29, lesdites plusieurs instructions comportant d'autres instructions qui font, lors de l'exécution par un processeur, que le processeur met en oeuvre l'étape supplémentaire de prévoir le C++ en tant que dit langage de programmation orienté objet.

31. Support lisible par ordinateur suivant la revendication 30, lesdites plusieurs instructions comportant d'autres instructions qui font, lors de l'exécution par un processeur, que le processeur met en oeuvre les étapes supplémentaires suivantes :
a) stockage desdites données relationnelles dans un cache de données ;
b) préparation d'un système de gestion d'objets pour l'exécution de fonctions C++ ;
c) gestion du stockage dudit objet de données par une base de système de gestion d'objets ; et
d) préparation d'un cache de gestion d'objets privé pour l'exécution de ladite au moins une procédure stockée.

32. Support lisible par ordinateur suivant la revendication 31, lesdites plusieurs instructions comportant d'autres instructions qui font, lors de l'exécution par un processeur, que le processeur met en oeuvre les étapes supplémentaires suivantes :
a) allocation dudit cache de gestion d'objets privé à chacun des multiples utilisateurs individuels ;
b) préparation d'une instance séparée de ladite au moins une procédure stockée dans ledit cache de gestion d'objets privé pour chacun desdits multiples utilisateurs individuels ;
c) préparation d'une instance séparée dudit objet de données pour chacun desdits multiples utilisateurs individuels dans ledit cache de gestion d'objets privé ; et
d) exécution de ladite instance séparée de ladite au moins une procédure stockée sur ladite instance séparée dudit objet de données.

33. Support lisible par ordinateur suivant la revendication 31, lesdites plusieurs instructions comportant d'autres instructions qui font, lors de l'exécution par un processeur, que le processeur met en oeuvre les étapes supplémentaires suivantes :
a) préparation d'une chaîne de pages comportant plusieurs pages, qui correspondent à ladite classe persistante ;
b) stockage dudit objet de données dans lesdites plusieurs pages ;
c) génération d'une table avec un numéro de page et une valeur univoque pour ledit numéro de page, laquelle valeur correspond au dit indicateur d'objet univoque pour ledit objet de données ;
d) réception d'une demande, d'une interface utilisateur, dudit objet de données ;
e) reproduction dudit indicateur d'objet sur ladite mémoire physique, dans laquelle est stocké ledit objet de données ; et
f) appel dudit objet de données.

34. Support lisible par ordinateur suivant la revendication 31, lesdites plusieurs instructions comportant d'autres instructions qui font, lors de l'exécution par un processeur, que le processeur met en oeuvre l'étape supplémentaire de la préparation d'un index de base de données pour faciliter ledit appel dudit objet de données.

35. Support lisible par ordinateur suivant la revendication 34, lesdites plusieurs instructions comportant d'autres instructions qui font, lors de l'exécution par un processeur, que le processeur met en oeuvre l'étape supplémentaire de la préparation dudit index de base de données en forme d'une structure de données en arbre B.

36. Support lisible par ordinateur suivant la revendication 30, lesdites plusieurs instructions comportant d'autres instructions qui font, lors de l'exécution par un processeur, que le processeur met en oeuvre les étapes supplémentaires suivantes :
a) gestion de ladite exécution de ladite au moins une procédure stockée ;
b) exécution d'une transaction Commit à la fin de ladite exécution de ladite au moins une procédure stockée ;
c) exécution d'une transaction Rollback, lorsque ladite exécution de ladite au moins une procédure stockée reste inachevée ;
d) enregistrement de ladite transaction Commit et de ladite transaction Rollback dans un enregistrement dans ledit système de gestion de base de données ;
e) enregistrement d'un état dudit objet de données avant ladite exécution de ladite au moins une procédure stockée ; et
f) appel dudit état dudit objet de données avant ladite exécution de ladite au moins une procédure stockée après ledit enregistrement de ladite transaction Rollback.
